(19) Europäisches Patentamt
European Patent Office
Office européen des brevets

(11) **EP 2 537 615 B1**

(12) **EUROPÄISCHE PATENTSCHRIFT**

(45) Veröffentlichungstag und Bekanntmachung des Hinweises auf die Patenterteilung:
**26.11.2014   Patentblatt 2014/48**

(51) Int Cl.:
***B23F 5/16*** *(2006.01)*

(21) Anmeldenummer: **11170677.6**

(22) Anmeldetag: **21.06.2011**

(54) **Robustes Verfahren zum Wälzschälen**

Robust method for skiving

Procédé robuste de taillage de cylindres

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.12.2012   Patentblatt 2012/52**

(73) Patentinhaber: **Klingelnberg AG**
**8050 Zürich (CH)**

(72) Erfinder:
• **Marx, Hartmut**
**40223 Düsseldorf (DE)**

• **Vogel, Olaf**
**76275 Ettlingen (DE)**

(74) Vertreter: **OK pat AG**
**Chamerstrasse 50**
**6300 Zug (CH)**

(56) Entgegenhaltungen:
WO-A1-2010/060733       DE-A1-102007 015 357
GB-A- 1 537 877          US-A- 4 173 920
US-A- 4 865 497

**Beschreibung**

Gebiet der Erfindung

Gegenstand der Erfindung ist ein robustes Verfahren zum Wälzschälen einer Verzahnung oder einer anderen periodischen Struktur. Siehe, zum Beispiel, DE 10 2007 015 357.

Hintergrund der Erfindung, Stand der Technik

Es gibt zahlreiche Verfahren zur Fertigung von Zahnrädern. Bei der spanenden Weichvorbearbeitung unterscheidet man Wälzfräsen (im Englischen hobbing genannt), Wälzstossen (im Englischen gear shaping genannt), Wälzhobeln (im Englischen generating planing genannt) und Wälzschälen (im Englischen power skiving genannt). Das Wälzfräsen und Wälzschälen sind sogenannte kontinuierliche Verfahren, wie im Folgenden näher erläutert wird.

Bei der spanenden Herstellung von Zahnrädern unterscheidet man zwischen dem Einzelteilverfahren (auch intermittierendes Teilverfahren und im Englischen intermitted indexing process oder single indexing process genannt) und dem kontinuierlichen Verfahren, das teilweise auch als kontinuierliches Teilungsverfahren (im Englischen continuous indexing process, oder face hobbing genannt) bezeichnet wird.

Beim kontinuierlichen Verfahren kommt beispielsweise ein Werkzeug mit entsprechenden Messern zum Einsatz, um die Flanken eines Werkstücks zu schneiden. Das Werkstück wird in einer Aufspannung kontinuierlich, d.h. im pausenlosen Verfahren fertig geschnitten. Das kontinuierliche Verfahren basiert auf komplexen, gekoppelten Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten, respektive gekoppelten Antreiben mehrerer Achsantriebe einer entsprechenden Maschine.

Beim Einzelteilverfahren wird eine Zahnlücke bearbeitet, dann erfolgen zum Beispiel eine relative Bewegung des Werkzeugs und eine sogenannte Teilungsbewegung (Teilungsdrehung), bei der sich das Werkstück relativ zum Werkzeug dreht, bevor dann die nächste Zahnlücke bearbeitet wird. Es wird so Schritt für Schritt ein Zahnrad gefertigt.

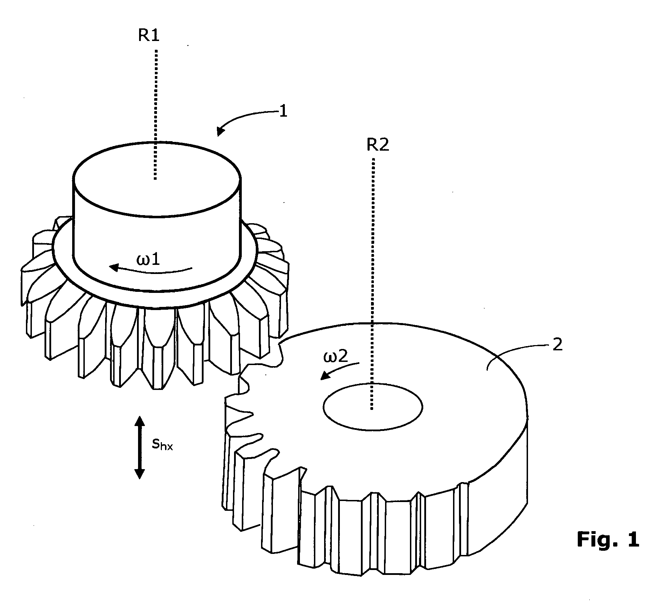

Das eingangs genannte Wälzstossverfahren kann durch ein Zylinderradgetriebe beschrieben oder dargestellt werden, da der Kreuzungswinkel (auch Achskreuzwinkel genannt) zwischen der Rotationsachse R1 des Stosswerkzeugs 1 und der Rotationsachse R2 des Werkstücks 2 Null Grad beträgt, wie in Fig. 1 schematisch dargestellt. Die beiden Rotationsachsen R1 und R2 verlaufen parallel, wenn der Achskreuzwinkel Null Grad beträgt. Das Werkstück 2 und das Stosswerkzeug 1 drehen sich kontinuierlich um ihre Rotationsachsen R2, bzw. R1. Das Stosswerkzeug 1 macht zusätzlich zu der Drehbewegung eine Hubbewegung, die in Fig. 1 durch den Doppelpfeil $s_{hx}$ bezeichnet ist, und nimmt bei dieser Hubbewegung Späne vom Werkstück 2 ab.

Vor einiger Zeit wurde ein Verfahren erneut aufgegriffen, das als Wälzschälen bezeichnet wird. Die Grundlagen sind circa 100 Jahre alt. Eine erste Patentanmeldung mit der Nummer DE 243514 zu diesem Thema geht auf das Jahr 1912 zurück. Nach den ursprünglichen Überlegungen und Untersuchungen der Anfangsjahre wurde das Wälzschälen nicht mehr ernsthaft weiter verfolgt. Es waren bisher aufwendige Prozesse, die teilweise empirisch waren, notwendig, um eine geeignete Werkzeuggeometrie für das Wälzschälverfahren zu finden.

Ungefähr Mitte der 1980er Jahre wurde das Wälzschälen erneut aufgegriffen. Erst mit den heutigen Simulationsverfahren und den modernen CNC-Steuerungen der Maschinen, konnte das Prinzip des Wälzschälens in ein produktives, reproduzierbares und robustes Verfahren umgesetzt werden. Hinzu kommen die hohe Verschleißfestigkeit heutiger Werkzeugmaterialien, die enorm hohe statische und dynamische Steifigkeit und die hohe Güte des Synchronlaufs der modernen Maschinen.

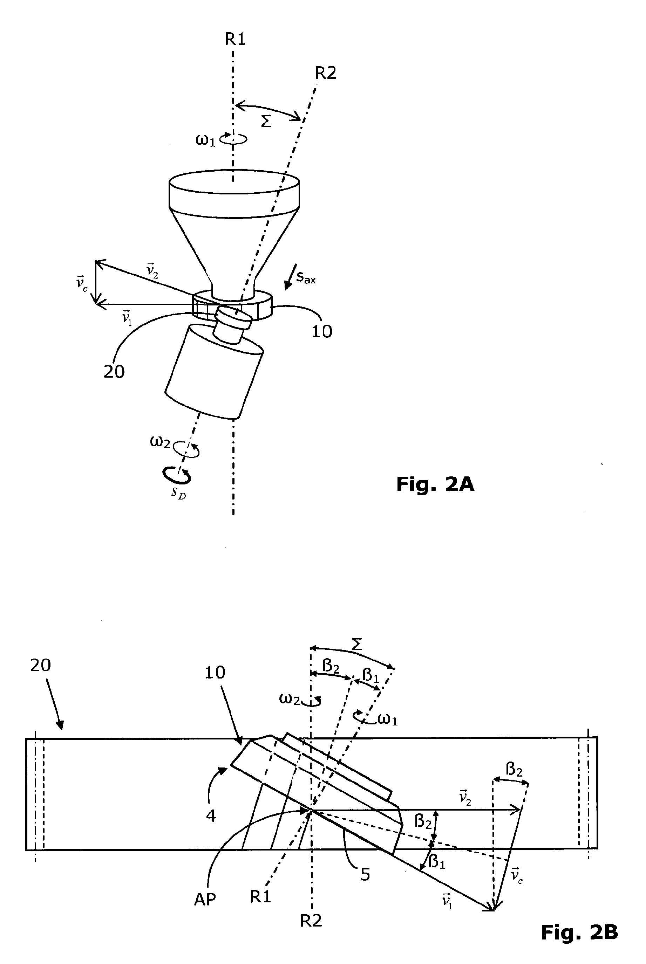

Beim Wälzschälen wird nun, wie in Fig. 2A gezeigt, ein Achskreuzwinkel $\Sigma$ zwischen der Rotationsachse R1 des Wälzschälzeugs 10 (auch als Schälrad bezeichnet) und der Rotationsachse R2 des Werkstücks 20 vorgegeben, der ungleich Null ist. Die resultierende Relativbewegung zwischen dem Wälzschälwerkzeug 10 und dem Werkstück 20 ist eine Schraubbewegung, die in einen Drehanteil (rotatorischer Anteil) und einen Schubanteil (translatorischer Anteil) zerlegt werden kann. Als antriebstechnisches Analogon kann ein Wälzschraubgetriebe betrachtet werden, wobei der Drehanteil dem Wälzen und der Schubanteil dem Gleiten der Flanken entspricht. Um so größer der Achskreuzwinkel $\Sigma$ betragsmäßig ist, um so mehr nimmt der für die Bearbeitung des Werkstücks 20 notwendige translatorische Bewegungsanteil zu. Er bewirkt nämlich eine Bewegungskomponente der Schneiden des Wälzschälwerkzeugs 10 in Richtung der Zahnflanken des Werkstücks 20. Beim Wälzschälen wird somit der Gleitanteil der kämmenden Relativbewegung der im Eingriff stehenden Zahnräder des Schraubradersatzgetriebes ausgenutzt, um die Schnittbewegung auszuführen. Beim Wälzschälen ist nur ein langsamer Axialvorschub (auch axialer Vorschub genannt) erforderlich und es entfällt die sogenannte Stossbewegung, die für das Wälzstossen typisch ist. Beim Wälzschälen tritt somit auch keine Rückhubbewegung auf.

Die Schnittgeschwindigkeit beim Wälzschälen wird direkt von der Drehzahl des Wälzschälwerkzeugs 10 bzw. des Werkstücks 20 und von dem verwendeten Achskreuzwinkel $\Sigma$ der Rotationsachsen R1 und R2 beeinflusst. Der

Achskreuzwinkel $\Sigma$ und damit der Gleitanteil sollte so gewählt werden, dass für die Bearbeitung des Materials bei gegebener Drehzahl eine optimale Schnittgeschwindigkeit erzielt wird.

Die Bewegungsabläufe und weitere Details eines vorbekannten Wälzschälverfahrens sind der bereits erwähnten schematischen Darstellung in Fig. 2A zu entnehmen. Fig. 2A zeigt das Wälzschälen einer Außenverzahnung an einem zylindrischen Werkstück 20. Das Werkstück 20 und das Werkzeug 10 (hier ein zylindrisches Wälzschälwerkzeug 10) rotieren in entgegengesetzter Richtung.

Hinzu kommen weitere Relativbewegungen. Es ist ein Axialvorschub $s_{ax}$ erforderlich, um die gesamte Verzahnbreite des Werkstücks 20 mit dem Werkzeug 10 bearbeiten zu können. Falls am Werkstück 20 eine Schrägverzahnung erwünscht ist (d.h. $\beta_2 \neq 0$), wird dem Axialvorschub $s_{ax}$ ein Differentialvorschub $s_D$ überlagert. Es kann ein Radialvorschub $s_{rad}$ eingesetzt werden, um die Balligkeit der Verzahnung des Werkstücks 20 zu beeinflussen.

Beim Wälzschälen ergibt sich der Vektor der Schnittgeschwindigkeit $\vec{v}_c$ im Wesentlichen als Differenz der beiden um den Achskreuzwinkel $\Sigma$ zueinander geneigten Geschwindigkeitsvektoren $\vec{v}_1$ und $\vec{v}_2$ der Rotationsachsen R1, R2 von Werkzeug 10 und Werkstück 20. $\vec{v}_1$ ist der Geschwindigkeitsvektor am Umfang des Werkzeugs 10 und $\vec{v}_2$ ist der Geschwindigkeitsvektor am Umfang des Werkstücks 20. Die Schnittgeschwindigkeit $v_c$ des Wälzschälprozesses kann also durch den Achskreuzwinkel $\Sigma$ und die Drehzahl im Schraubradersatzgetriebe verändert werden. Der Axialvorschub $s_{ax}$ hat nur einen kleinen Einfluss auf die Schnittgeschwindigkeit $v_c$, welcher vernachlässigt werden kann und deshalb in dem Vektordiagramm mit den Vektoren $\vec{v}_1$, $\vec{v}_2$ und $\vec{v}_c$ in Fig. 2A nicht gezeigt ist.

In Fig. 2B ist das Wälzschälen einer Außenverzahnung eines Werkstücks 20 mit einem konischen Wälzschälwerkzeug 10 gezeigt. In Fig. 2B sind wiederum der Achskreuzwinkel $\Sigma$, der Vektor der Schnittgeschwindigkeit $\vec{v}_c$, die Geschwindigkeitsvektoren $\vec{v}_1$ am Umfang des Werkzeugs 10 und $\vec{v}_2$ am Umfang des Werkstücks 20, sowie der Schrägungswinkels $\beta_1$ des Werkzeugs 10 und der Schrägungswinkel $\beta_2$ des Werkstücks 20 gezeigt. In Fig. 2A ist der Schrägungswinkel $\beta_2$ ungleich Null. Der Zahnkopf des Werkzeugs 10 ist in Fig. 2B mit dem Bezugszeichen 4 gekennzeichnet. Die Zahnbrust ist in Fig. 2B mit dem Bezugszeichen 5 gekennzeichnet. Die beiden Rotationsachsen R1 und R2 schneiden sich nicht, sondern sind windschief zueinander angeordnet. Bei einem konischen Wälzschälwerkzeug 10 wird der Auslegungspunkt AP bisher üblicherweise auf dem Gemeinlot der beiden Rotationsachsen R1 und R2 gewählt, da ein Ankippen des Wälzschälwerkzeugs 10 zur Beschaffung von Freiwinkeln nicht notwendig ist. Der Auslegungspunkt AP fällt hier mit dem sogenannten Berührpunkt zusammen. In diesem Auslegungspunkt AP berühren sich die Wälzkreise des Schraubwälzersatzgetriebes.

Es ist aus der deutschen Patentanmeldung DE3915976 A1 bekannt, dass man beim Wälzschälen dem langsamen Axialvorschub eine radial gerichtete Bewegung überlagern kann, um Flankenlinien-Modifikationen zu erzielen. Auf diesem Wege kann die Balligkeit einer Verzahnung beeinflusst werden.

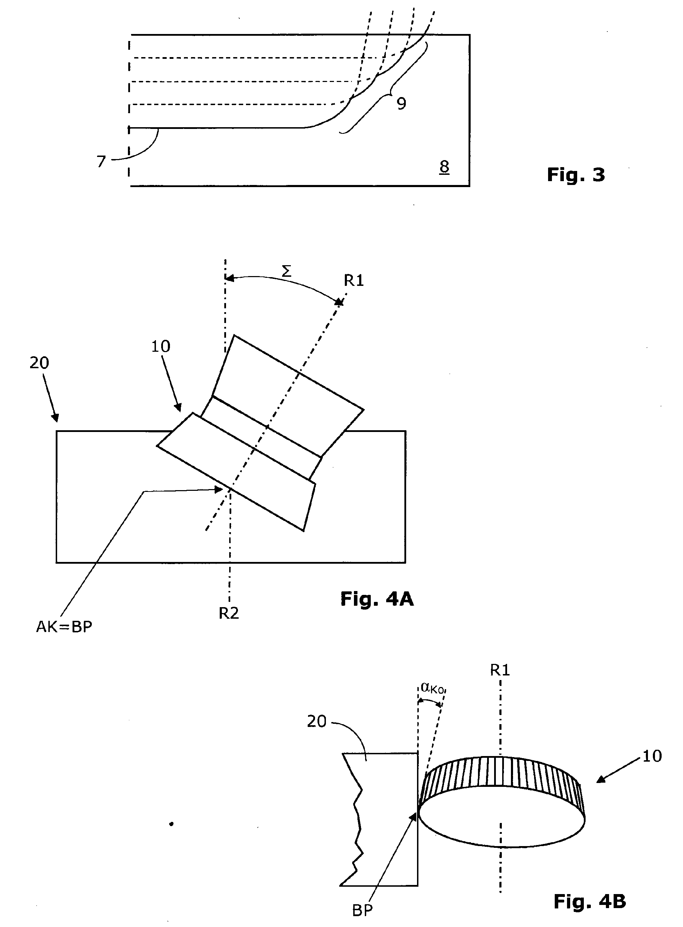

Ausserdem ist aus der internationalen Patentanmeldung WO 2010/060733 A1 bekannt, dass durch eine Überlagerung des Axialvorschubs mit einer Radialbewegung Verzahnungen erzeugt werden können, deren Zahnnuten am jeweiligen Ende radial und axial in die Oberfläche des unverzahnten Werkstücks auslaufen. Primär geht es in der genannten internationalen Patentanmeldung um eine sogenannte Mehrschnittstrategie, wie in Fig. 3 schematisch angedeutet. In Fig. 3 ist das auslaufende Ende einer Zahnnut 7 eines entsprechenden Werkstücks 8 gezeigt. Fig. 3 zeigt mehrere Bahnen, die das Wälzschälwerkzeug bei der Mehrschnittstrategie im Werkstück 8 gebildet hat. Aufgrund der Überlagerung des Axialvorschubs mit der Radialbewegung ergibt sich am Ende der Zahnnut 7 ein auslaufendes Profil, das sich im Bereich 9 aus mehreren Kurvensegmenten zusammen setzt. Es geht in der genannten internationalen Patentanmeldung nicht um das Erzeugen vollständig generierter Zahnlücken.

Um die Produktivität des Wälzschälens - etwa beim Einsatz moderner Schneidmaterialien wie Hartmetallen zur Trockenbearbeitung - möglichst groß zu machen, muss der Gleitanteil der Relativbewegung zwischen Wälzschälwerkzeug und Werkstück ausreichend hohe Schnittgeschwindigkeiten erzeugen. Die Schnittgeschwindigkeit $v_c$ wird beim Wälzschälen direkt durch die Rotationsgeschwindigkeit des Schraubradersatzgetriebes, durch die wirksamen Werkstück- bzw. Werkzeugradien und den Achskreuzwinkel $\Sigma$ der Rotationsachsen R1 und R2 beeinflusst. Die mögliche Rotationsgeschwindigkeit ist hierbei durch die erlaubten Drehzahlen der verwendeten Bearbeitungsmaschine (Wälzschälmaschine) beschränkt. Die Werkstückgröße ist fest vorgeben. Die mögliche Werkzeuggröße ist durch den Arbeitsraum der verwendeten Bearbeitungsmaschine (Wälzschälmaschine) und bei Innenverzahnungen auch durch den Innenraum dieser Verzahnung selbst beschränkt. Deshalb können ausreichend hohe Schnittgeschwindigkeiten oft nur durch entsprechend hohe Achskreuzwinkel $\Sigma$ erzeugt werden.

Beim Wälzschälen kommt ein Werkzeug 10 zum Einsatz, das mindestens eine geometrisch bestimmte Schneide umfasst. Die Schneide/Schneiden sind in Fig. 2A und Fig. 2B nicht gezeigt. Die Form und Anordnung der Schneiden gehören zu denjenigen Aspekten, die in der Praxis bei einer konkreten Auslegung berücksichtigt werden müssen.

Ausserdem kommt dem Werkzeug selbst beim Wälzschälen eine große Bedeutung zu. Das Wälzschälwerkzeug 10 hat in dem in Fig. 2A gezeigten Beispiel die Form eines geradverzahnten Stirnrads. Die Außenkontur des Grundkörpers in Fig. 2A ist zylindrisch. Sie kann aber auch kegelig (auch konisch genannt) sein, wie in Fig. 2B gezeigt. Da der oder die Zähne des Wälzschälwerkzeugs 10 über die gesamte Schneidkantenlänge in Eingriff kommen, benötigt jeder Zahn des Werkzeugs 10 an der Schneidkante einen ausreichenden Freiwinkel.

Wenn man von einem gerad- oder schrägverzahnten konischen Wälzschälwerkzeug 10 ausgeht, wie in den Figuren 4A und 4B gezeigt, dann erkennt man, dass ein solches Wälzschälwerkzeug 10 sogenannte konstruktive Freiwinkel aufgrund der konischen Grundform des Wälzschälwerkzeugs 10 aufweist. D.h. die Freiwinkel am Kopf und an den Flanken des konischen Wälzschälwerkzeugs 10 sind aufgrund der Geometrie des Wälzschälwerkzeugs 10 vorgegeben. Das Profil der Schneiden eines konischen Wälzschälwerkzeugs 10 muss jedoch bestimmte Bedingungen erfüllen, um überhaupt ein Nachschleifen zu ermöglichen. In den Figuren 4A und 4B ist ein konisches Wälzschälwerkzeug 10 beim Aussenverzahnen eines Werkstücks 20 gezeigt. Der sogenannte konstruktive Freiwinkel $\alpha_{Ko}$ am Schneidenkopf des konischen Wälzschälwerkzeugs 10 ist in Fig. 4B zu erkennen. Der Achskreuzpunkt AK und der Berührpunkt BP der Wälzkreise von Wälzschälwerkzeug 10 und Werkstück 20 fallen bei der Figur 4A zusammen und liegen auf dem Gemeinlot GL (nicht in den Figuren 4A und 4B zu erkennen bzw. gezeigt) der Rotationsachsen R1 und R2.

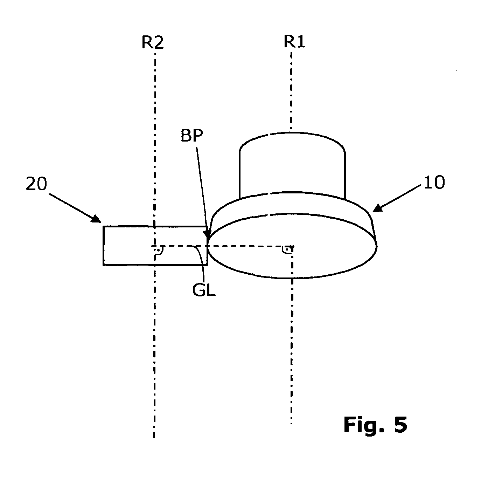

In Fig. 5 ist eine weitere Abbildung eines gerad- oder schrägverzahnten konischen Wälzschälwerkzeugs 10 und eines zylinderförmigen Werkstücks 20 gezeigt, wobei die Ansicht in Fig. 5 so gewählt wurde, dass beide Rotationsachsen R1 und R2 parallel verlaufen, obwohl die beiden Achsen R1 und R2 in Bezug zueinander windschief stehen. In Fig. 5 ist das Gemeinlot GL der beiden Achsen R1 und R2 zu erkennen. Der Berührpunkt BP liegt auf dem Gemeinlot GL, wie in Fig. 5 gezeigt.

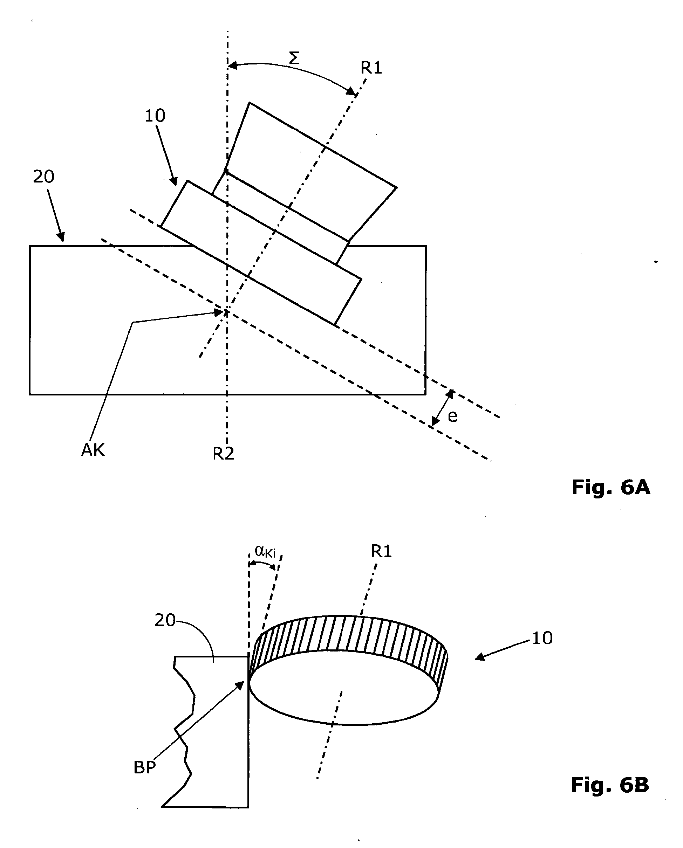

In den Figuren 6A und 6B ist eine Konstellation eines zylindrischen Wälzschälwerkzeugs 10 und eines aussenverzahnten zylindrischen Werkstücks 20 gezeigt. Das Wälzschälwerkzeug 10 ist nicht nur windschief in Bezug zur Rotationsachse R2 des Werkstücks 20 angeordnet (wie in Fig. 6A anhand des entsprechenden Achskreuzwinkels $\Sigma$ zu erkennen ist), sondern derart gegenüber dem Werkstück 20 positioniert, dass es auch mit einem kleinen Winkel $\alpha_{Ki}$ von ihm weggeneigt ist (wie in Fig. 6B gut zu erkennen ist). Durch das Wegneigen des Wälzschälwerkzeugs 10 kann so ein effektiver Freiwinkel erzeugt werden, der in Fig. 6B für die Kopfschneide als $\alpha_{Ki}$ gezeigt ist. Auch an den Seitenschneiden des Werkzeugs werden durch das Wegneigen effektive Freiwinkel erzeugt. Diese fallen jedoch kleiner aus als an der Kopfschneide. In der Regel sind diese Freiwinkel nur halb so groß.

Wenn man von einem gerad- oder schrägverzahnten zylindrischen Wälzschälwerkzeug 10 ausgeht, wie in den Figuren 6A und 6B gezeigt, dann erkennt man, dass ein solches Wälzschälwerkzeug 10 konstruktionsbedingt weder am Kopf noch an den Flanken sogenannte konstruktive Freiwinkel aufweist. Wenn ein solches zylindrisches Wälzschälwerkzeug 10 in der herkömmlichen Art und Weise aufgespannt würde, wären keine Freiwinkel gegeben. Durch das Wegneigen des Wälzschälwerkzeugs 10 kann ein kinematischer Freiwinkel erzeugt werden, wie bereits beschrieben. Praktisch wird das Wegneigen des Wälzschälwerkzeugs 10 durch eine exzentrische Aufspannung des Wälzschälwerkzeugs 10 in der Maschine erzielt, um so einen Versatz der Spanfläche aus dem Achskreuzungspunkt AK zu bewirken. Der Berührpunkt BP der Wälzkreise von Wälzschälwerkzeug 10 und Werkstück 20 liegt durch das Wegneigen des Wälzschälwerkzeugs 10 nicht mehr auf dem Gemeinlot der Rotationsachsen R1 und R2. Der entsprechende Versatz (im Englischen Offset genannt) wird auch als Spanflächenversatz e bezeichnet und ist in Fig. 6A zu erkennen. Umso weiter das Wälzschälwerkzeug 10 weggeneigt wird, umso größer werden die effektiven Freiwinkel. Die für das Wälzschälen erforderlichen Freiwinkel liegen im Bereich zwischen 3 Grad und 5 Grad. Um diese Freiwinkel vorzugeben, ist ein Wegneigen von zylindrischen Wälzschälwerkzeugen 10 von bis zu 10 Grad erforderlich und in der Praxis üblich.

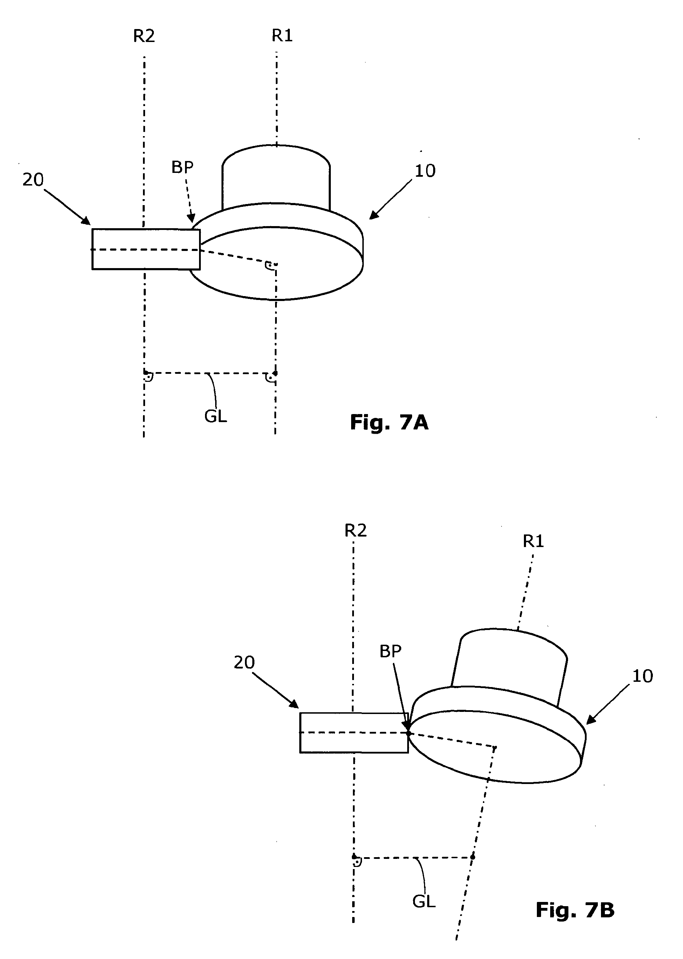

In den Figuren 7A und 7B sind weitere Abbildungen eines gerad- oder schrägverzahnten zylindrischen Wälzschälwerkzeugs 10 und eines zylinderförmigen Werkstücks 20 gezeigt, wobei die Ansicht in Fig. 7A so gewählt wurde, dass beide Rotationsachsen R1 und R2 parallel verlaufen, obwohl die beiden Achsen R1 und R2 in Bezug zueinander windschief stehen. In Fig. 7A ist das Gemeinlot GL der beiden Achsen R1 und R2 zu erkennen. Der Berührpunkt BP liegt in den Figuren 7A und 7B oberhalb des Gemeinlots GL. In Fig. 7B ist eine sogenannte Berühransicht (auch Berührebenenseitenprojektion genannt) gezeigt in der der Berührpunkt BP sichtbar ist. In der Darstellung von Fig. 7A liegt der Berührpunkt BP hinter dem Werkstück 20 versteckt.

Eigene Untersuchungen bisheriger Wälzschälverfahren haben gezeigt, dass es zu einem plötzlichen Versagen des Wälzschälwerkzeugs kommen kann. Genauere Betrachtungen und Auswertungen haben ergeben, dass während des Wälzschälens unter anderem extrem negative Spanwinkel auftreten können. Simulationen der Gesamtheit der Bahnpunkte der Schneiden, welche in das Material des Werkstückstücks schneiden, haben ergeben, dass beim Vollschnitt in der Lücke insbesondere der effektive Kopfspanwinkel vom Beginn der Spanbildung bis hin zum Austritt des Wälzschälwerkzeugs aus der Lücke immer negativer wird. D.h. genauer, dass während des Abtragens eines Spanes beim üblichen Wälzschälen die Spandicke beginnend von der Erzeugendenlinie zunimmt wobei der effektive Spanwinkel kontinuierlich von anfangs ca. Null Grad kleiner wird. Dieser effektive Spanwinkel kann am Ende der Bildung eines Spanes am Schneidenkopf beispielsweise bis zu -60 Grad oder in sehr ungünstigen Fällen sogar weniger als - 60 Grad betragen. Dieser Aspekt kann zu einem vorzeitigen Verschleiß des Wälzschälwerkzeugs führen.

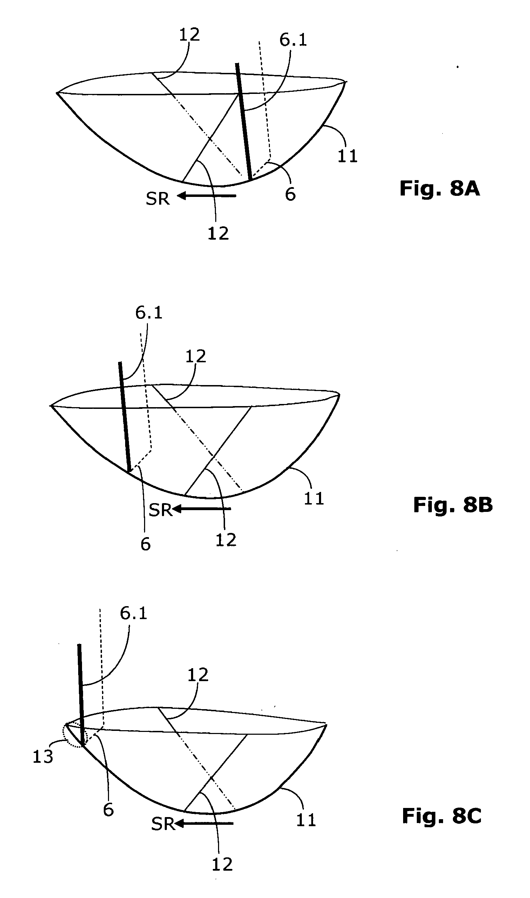

Die Bewegung eines Schneidzahns 6 eines Wälzschälwerkzeugs 10 durch das Material eines Werkstücks 20 ist in den Figuren 8A bis 8C schematisch dargestellt. Die Figuren 8A bis 8C zeigen den effektiven Spanwinkelverlauf am Schneidenkopf, respektive am Schneidzahn 6, über den Schnittverlauf beim Vollschnitt. Aufgrund der Überlagerung von gekoppelten, d.h. miteinander synchronisierten Drehbewegungen des Wälzschälwerkzeugs 10 um die erste Rotationsachse R1 und des Werkstücks um die zweite Rotationsachse R2, und von linearen Axialbewegungen des Wälzschälwerkzeugs 10 relativ zum Werkstück 20, ergibt sich bei einer Aufzeichnung der Gesamtheit der Bahnpunkte einer Schneide eine Art Wannen- oder Trogform, wie in den Figuren 8A bis 8C, 9, 10 und 11A, 11B gezeigt. Die entsprechende Wanne ist in den Figuren 8A bis 8C, 9 und 10 mit dem Bezugszeichen 11 gekennzeichnet.

Fig. 8A zeigt die Relativbewegung des Schneidzahns 6 des Wälzschälwerkzeugs 10 im Material des Werkstücks 20 in einer ersten Momentaufnahme. Die Orientierung und Lage der Schneide 6.1 des Schneidzahns 6 ist durch einen dicken Strich dargestellt. Die Wanne 11 ergibt sich aus der Gesamtheit der in der Lücke 22 des Werkstücks 20 liegenden Bahnpunkte der Schneide 6.1 des Schneidzahns 6 für einen Eingriff des Schneidzahns 6 in diese Lücke 22. Der darauffolgende Eingriff eines weiteren Schneidzahns (dies kann derselbe oder ein anderer Schneidzahn des Werkzeugs sein) erzeugt ebenso eine Wanne 11, welche auf Grund des Axialvorschubs und des daran gekoppelten Differentialvorschubs in axialer Richtung innerhalb der Lücke 22 versetzt ist. Die Wanne 11 bewegt sich also während des Wälzschälens schrittweise (zumindest virtuell) durch das Material des Werkstücks 20. Fig. 8A zeigt eine Linie 12, die die Wanne 11 in einen linken und einen rechten Abschnitt unterteilen. Der verdeckte Teil der Linie 12 ist strichpunktiert gezeigt. Die Linie 12 grenzt die Überlagerung von zwei Wannen voneinander ab, welche sich in ihrer Position um den Vorschub zwischen zwei unmittelbar aufeinanderfolgenden Schneidzahneingriffen unterscheiden. D.h. die Linie 12 kennzeichnet die Schnittkurve der beiden Wannen. Für unendlich kleinen Axialvorschub entspricht diese Schnittkurve der sogenannten Erzeugendenlinie. Die gesamte Zahnlücke kann man sich als Menge solcher Erzeugendenlinien denken, die in Schnittrichtung durch das Material des Werkstücks 20 wandern. Im konventionellen Wälzschäl-Bearbeitungsprozess mit axialem Vorschub wird durch die bewegte Schneide 6.1 nur im Bereich ab der Erzeugendenlinie (d.h. in der konkret gezeigten Darstellung links von der Erzeugendenlinie) Material am Werkstück 20 abgetragen. In Schnittrichtung vor der Erzeugendenlinie (d.h. in der konkret gezeigten Darstellung rechts von der Erzeugendenlinie) wurde das Material bereits durch den vorherigen Werkzeugeingriff abgetragen.

Fig. 8B zeigt eine zweite Momentaufnahme der Simulation, wobei sich der Schneidzahn 6 des Wälzschälwerkzeugs 10 im Material des Werkstücks 20 gegenüber der Situation in Fig. 8A ein Stück weiter nach links in Schnittrichtung SR bewegt hat.

Fig. 8C zeigt eine dritte Momentaufnahme der Simulation, wobei sich der Schneidzahn 6 des Wälzschälwerkzeugs 10 im Material des Werkstücks 20 gegenüber der Situation in Fig. 8B noch ein Stück weiter nach links in Schnittrichtung SR bewegt hat. In Fig. 8C ist gut zu erkennen, dass die Spanfläche der Schneide 6.1 des Schneidzahns 6 in Bezug zu der Wanne 11 einen spitzen Winkel einschließt. Der entsprechende "kritische" Bereich ist in Fig. 8C mit dem Bezugszeichen 13 gekennzeichnet. Im Bereich 13 ergibt sich also ein extrem negativer effektiver Spanwinkel, wie bereits erwähnt.

Während des Wälzschälprozesses wird insbesondere der effektive Kopfspanwinkel somit immer negativer, wie bereits erwähnt. Der Anstellwinkel des Schneidzahns 6 zum gedachten Lückengrund am Werkstück 20 bleibt beim Wälzschälen in etwa gleich. Die Kopfschneide des Schneidzahns 6 "schleift" über den Wannenboden.

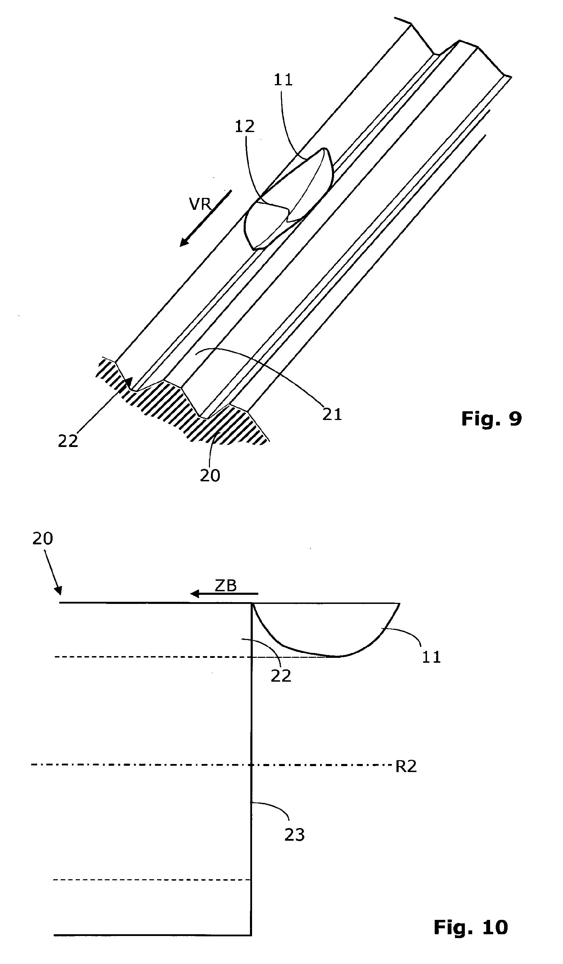

In Fig. 9 ist ein Abschnitt eines Werkstücks 20 mit mehreren Zähnen 21 und Zahnlücken 22 gezeigt. Wenn man nun den gesamten Bewegungsverlauf bei der Wälzschälbearbeitung eines Werkstücks 20 betrachtet, ist zu erkennen, dass sich die Wanne 11 durch eine Zahnlücke 22 hindurch bewegt, bis die Zahnlücke 22 komplett fertig gestellt ist. Die Bewegung der Wanne 11 durch die Zahnlücke 22 hindurch ist durch einen Richtungspfeil VR angedeutet, der in Vorschubrichtung deutet. Diese Vorschubrichtung setzt sich aus Axial- und Differentialvorschub zusammen.

Obige Untersuchungen des Spanwinkels während des Wälzschälens gelten insbesondere für die Erzeugung eines vollen Spanes im laufenden Wälzschälprozess. Jedoch liefern sie auch wichtige Erkenntnisse über den Anfang des Wälzschälprozesses, bei dem erst in die Lücke "eingestochen" werden muss. Beim üblichen Einstechen des Wälzschälwerkzeugs in axialer Richtung des Werkstücks tritt eine erste Berührung eines Schneidzahns 6 mit dem Werkstück 20 mit deutlich negativem effektiven Spanwinkel auf. Somit werden bisher die ersten Späne mit denkbar schlechten Spanungsbedingungen erzeugt. Aufgrund des großen negativen Spanwinkels bei der ersten Berührung ist die Belastung der Schneide 6.1 sehr hoch. Die auf die Schneide 6.1 (insbesondere Schneidkante) wirkenden Kräfte nehmen dabei sprunghaft zu, was zu einem unmittelbaren Zerstören der Schneide 6.1 führen kann. Diese hohe Belastung kann das plötzliche, schlagartige Versagen des Wälzschälwerkzeugs 10 erklären, dass teilweise beobachtet wurde. Im laufenden Wälzschälprozess gemäss der Figuren 8A - 8C und 9 treten die ungünstigen effektiven Spanwinkel zwar auch auf, wie oben erwähnt, jedoch wird die Belastung der Schneide 6.1 hierbei kontinuierlich und nicht sprunghaft aufgebaut. Es handelt sich also um unterschiedliche Verschleiß- oder Versagensphänomene.

Beim axialen Einstechen, das bisher praktiziert wird, wird die Wanne 11 seitlich an die Zahnlücke 21 geführt, so dass der Wannenrand der Wanne 11 mit den schlechtesten Schnittbedingungen zuerst das Werkstück 20 im Bereich der Stirnseite 23 berührt, wie in Fig. 10 gezeigt. Diese erste Berührung erfolgt typischerweise mit dem Kopfbereich der Schneide 6.1 auf der Seite der auslaufenden Flanke. Das axiale Einstechen wird in Fig. 10 durch den Pfeil ZB angedeutet. Der Pfeil ZB verläuft hierbei parallel zur Rotationsachse R2 des Werkstücks 20.

Aufgabe der vorliegenden Erfindung ist es, ein Verfahren zum spanenden Bearbeiten der Zahnflanken eines Zahnrades oder anderer periodischer Strukturen bereitzustellen, das sich durch eine gute Produktivität auszeichnet. Die Reduktion der Bearbeitungszeit und der Produktionskosten pro Zahnrad ist ein Hauptziel der Erfindung. Andererseits soll das Verfahren, das vorgeschlagen wird, robust sein und sich für den Einsatz in der Serienfertigung, zum Beispiel in der Automobilbranche, eignen.

Insbesondere geht es darum, die Werkzeugkosten möglichst niedrig zu halten, indem die Standzeit der Werkzeuge verbessert wird.

Diese Aufgabe wird gemäß der vorliegenden Erfindung durch ein Verfahren gelöst, das hier als Wälzschälverfahren mit modifizierter Einstechstrategie bezeichnet wird. Die modifizierte Einstechstrategie sieht vor, dass das Zustellen und Eintauchen mit einer deutlichen radialen Bewegungskomponente erfolgt, wobei sich beim Zustellen ein Erstkontakt zwischen dem Wälzschälwerkzeug und dem Werkstück mit einem effektiven Spanwinkel ergibt, der in etwa Null Grad beträgt. Dieser effektive Spanwinkel ergibt sich dadurch, dass aufgrund der beschriebenen Wannenform der Wannenboden bei der modifizierten Einstechstrategie als erstes mit dem Material des Werkstücks in Berührung kommt.

Die modifizierte Einstechstrategie lässt sich im Zusammenhang mit den verschiedensten Wälzschälverfahren anwenden, die zur Herstellung rotationssymmetrischer periodischer Strukturen geeignet sind.

Die modifizierte Einstechstrategie ist zum Einsatz beim Wälzschälen eines Werkstücks mit rotationssymmetrischer, periodischer Struktur unter Einsatz eines durch eine Werkzeugspindel gehaltenen Wälzschälwerkzeugs ausgelegt. Bei dem modifizierten Einstechverfahren

- dreht sich das Wälzschälwerkzeug kontinuierlich um eine erste Rotationsachse,
- dreht sich das Werkstück kontinuierlich und synchron zum Wälzschälwerkzeug um eine zweite Rotationsachse,
- wird das Wälzschälwerkzeug mit einer radialen Bewegungskomponente in Richtung Werkstück zugestellt und mit einer radialen Bewegungskomponente bis zur vollen Tiefe ins Werkstück eingetaucht, wobei mindestens während des Eintauchens die erste Rotationsachse windschief zur zweiten Rotationsachse verläuft.

Während des anschließenden Wälzschälens vollführt das sich drehende Wälzschälwerkzeug ab dem Erreichen der vollen Tiefe, d.h. gegen Ende des Eintauchens, eine relative Vorschubbewegung in Bezug auf das sich drehende Werkstück in Richtung der zweiten Rotationsachse, wobei auch während des Wälzschälens die erste Rotationsachse windschief zur zweiten Rotationsachse verläuft.

Kennzeichnend für das modifizierte Einstechverfahren der Erfindung ist, dass die relativen Bewegungsabläufe (Relativbewegung genannt) zwischen Werkstück und Wälzschälwerkzeug so vorgegeben und ausgeführt werden, dass die Schnittbedingungen an den Schneidkanten der Schneidzähne des Wälzwerkzeugs beim ersten Berühren und beim Eintauchen in einem optimalen Bereich liegen.

Kennzeichnend für das modifizierte Einstechverfahren der Erfindung ist, dass der Punkt der ersten Berührung des Wälzschälwerkzeugs mit dem Werkstück beim Einstechen in etwa mit dem tiefsten Punkt TP der Wanne zusammen fällt.

Gemäss Erfindung kann dem Zustellen und dem radialen Eintauchen eine leichte translatorische Bewegungen überlagert sein, wobei der resultierende Bewegungsvektor einen spitzen Winkel mit einer Normalen der Rotationsachse des Werkstücks einschließt.

Die Erfindung basiert darauf, dass die Relativbewegung des Wälzschälwerkzeugs in Bezug zu dem Werkstück so vorgegeben wird, dass es gegenüber dem herkömmlichen axialen Einstechen zu deutlich günstigeren Spanungsbedingungen kommt.

Beim Wälzschälen, das nach dem modifizierten Einstechverfahren folgt, wird Material am Werkstück fortschreitend abgetragen, bis die Zähne oder die anderen periodischen Strukturen vollständig ausgebildet sind.

Durch das modifizierte Einstechverfahren wird das sprunghafte Auftreten extrem negativer Spanwinkel an den Schneidzähnen des Wälzschälwerkzeugs vermieden. Ausserdem hat das modifizierte Einstechverfahren den Vorteil, das im Vergleich zum herkömmlichen axialen Einstechen eine deutlich kleinere Einlaufzone in axialer Richtung erforderlich ist.

Die Zahnlücken können gemäss Erfindung direkt auf die volle Tiefe gebracht werden und müssen in diesem Fall nicht in einer Mehrschnittstrategie erzeugt werden. Daher erfolgt das Eintauchen vorzugsweise bis zur vollen Tiefe. Vorzugsweise geht es hier also bei allen Ausführungsformen um das Einstechen im Zusammenhang mit einer Einschnittstrategie.

Ausserdem geht es hier um das Wälzschälen von am Verzahnungsanfang durchgängigen Verzahnungen, d.h. es geht hier nicht um das Wälzschälen von Zahnnuten, die am Anfang geschlossen sind.

Kennzeichnend für das modifizierte Einstechverfahren ist, dass durch den Materialabtrag während des Einstechens keine resultierende, d.h. endgültige Lückengeometrie erzeugt wird. Die endgültige Lückengeometrie wird erst durch die eigentliche Wälzschälbearbeitung nach dem Einstechen erzeugt.

Um eine Zahnlücke vollständig zu generieren, reicht es gemäss Erfindung aus, in einer bestimmbaren Position in Breitenrichtung der Verzahnung mit einer radialen Bewegungskomponente zum Werkstück zuzustellen und bis auf die volle radiale Tiefe einzutauchen. Die Position des radialen Eintauchens bestimmt sich vorzugsweise aus der Lage der Erzeugendenlinie.

Gemäss Erfindung erfolgt bei allen Ausführungsformen die erste Spanabnahme bei deutlich günstigeren Spanungsbedingungen als bei bisherigen Wälzschälverfahren. Dadurch wird die Standzeit der Wälzschälwerkzeuge deutlich verbessert und es wird vor allem das plötzliche Versagen eines Wälzschälwerkzeugs vermieden.

Gemäss Erfindung liegt aufgrund des radialen Zustellens der Punkt, an dem das Wälzschälwerkzeug das Werkstück erstmals berührt, in einen Bereich, der einen geeigneten effektiven Spanwinkel von ca. Null Grad an dem Schneidzahn des Wälzschälwerkzeugs gewährleistet.

Gemäss Erfindung liegt der Punkt, an dem das Wälzschälwerkzeug das Werkstück erstmals berührt, vorzugsweise direkt im Übergangsbereich zwischen der Stirnseite und der Mantelfläche des Werkstücks.

Gemäss Erfindung wird der Punkt, an dem das Wälzschälwerkzeug seine Bewegung in Vorschubrichtung durch das Material des Werkstücks beginnt, vorzugsweise unter Berücksichtigung der Lage der Erzeugendenlinie ermittelt. Um nur einen kurzen Einlaufweg in axialer Richtung sicher zu stellen, wird die virtuelle Erzeugendenlinie kurz vor die Stirnfläche des zu bearbeitenden Werkstücks positioniert, da beim üblichen Wälzschälen erst hinter der Erzeugendenlinie Material abgetragen wird. Als positiver Nebeneffekt ergibt sich durch dieses Positionieren der Erzeugendenlinie eine Verkürzung der Bearbeitungszeit.

Zusätzlich kann unmittelbar nach dem Fertiggenerieren einer Lücke radial herausgefahren werden. Das Fertiggenerieren einer Lücke ist dann erreicht, wenn die Erzeugendenlinie das Material des Werkstücks verlassen hat. Als positiver Nebeneffekt ergibt sich durch das radiale Herausfahren generell eine Verkürzung der Bearbeitungszeit.

Die Rotationsachse des Wälzschälwerkzeugs ist mindestens beim Eintauchen und während des Wälzschälens schräg gegenüber der Rotationsachse des Werkstücks angestellt, d.h. der Achskreuzwinkel $\Sigma$ ist ungleich Null.

Zusätzlich kann das Wälzschälwerkzeug während des Eintauchens und während des Wälzschälens in Richtung auf das Werkstück hingeneigt oder vom Werkstück weggeneigt sein, d.h. es wird vorzugsweise ein Neigungswinkel $\delta$ vorgegeben, der ungleich Null ist.

Der Betrag des Neigungswinkels $\delta$ liegt vorzugsweise in einem Winkelbereich zwischen 2 Grad und 45 Grad und vorzugsweise zwischen 5 Grad und 30 Grad.

Bei dem entsprechenden modifizierten Einstechverfahren handelt es sich um ein Verfahren, das im Vorfeld vor einem kontinuierlichen, spanabhebenden Verfahren eingesetzt wird. Das Eintauchen selbst ist auch kontinuierlich und spanabhebend.

Vorzugsweise kommt bei allen Ausführungsformen ein schälradartiges Wälzschälwerkzeug zum Einsatz, das sich deutlich von Stirnmesserkopf-Werkzeugen unterscheidet.

Vorzugsweise weist das Wälzschälwerkzeug einen schälradartigen Werkzeugbereich auf, der Schneiden hat, die in Form von Schneidzähnen ausgeprägt sind, die schräg nach aussen ragen.

Vorzugsweise weist das Wälzschälwerkzeug einen schälradartigen Werkzeugbereich auf, der die Form eines Schneidrads, vorzugsweise die Form eines Scheibenschneidrads, eines Schaftschneidrads oder Scheiben-Glockenschneidrads (z.B. gemäss DIN 3972 oder DIN 5480) hat.

Die schälradartigen Wälzschälwerkzeuge sind entweder als sogenannte Vollwerkzeuge ausgelegt, d.h. es handelt sich um Werkzeuge, die im Wesentlichen einstückig ausgeführt sind, oder sie sind als Messerkopf-Werkzeuge (hier Stabmesser-Schälrad genannt) ausgelegt, die einen Messerkopfgrundkörper haben, der mit Messereinsätzen, vorzugsweise in Form von Stabmessern, bestückt ist.

Die Wälzschälwerkzeuge haben gemäss Erfindung vorzugsweise bei allen Ausführungsformen sogenannte konstruktive Freiwinkel. D.h. die Freiwinkel werden aufgrund der Geometrie des Wälzschälwerkzeugs unter Berücksichtigung der Kinematik vorgegeben.

Das beschriebene und beanspruchte modifizierte Einstechverfahren lässt sich auf verschiedenste Verzahnungen und andere periodisch wiederkehrende Strukturen anwenden.

Die Erfindung bietet gegenüber dem konventionellen axialen Einstechverfahren eine Reihe von Vorteilen, die im Folgenden zusammenfassend aufgeführt sind:

- verbesserte Spanungssituation;
- bessere effektive Spanwinkel (insbesondere am Schneidenkopf);
- geringerer Werkzeugverschleiss;
- längere Standzeit der Werkzeuge;
- geringere Werkzeugstückkosten;
- kein plötzliches Werkzeugversagen;
- bessere Wirtschaftlichkeit.

Das erfindungsgemässe Verfahren kann sowohl im Zusammenhang mit einer Trocken- als auch einer Nassbearbeitung durchgeführt werden.

Das modifizierte Einstechen kann nicht nur im Zusammenhang mit dem Herstellen von Außenverzahnungen eingesetzt werden. Es kann auch vorteilhaft im Zusammenhang mit dem Herstellen von Innenverzahnungen eingesetzt werden.

ZEICHNUNGEN

Weitere Einzelheiten und Vorteile der Erfindung werden im Folgenden anhand von Ausführungsbeispielen und mit Bezug auf die Zeichnung beschrieben. In allen schematischen Zeichnungen sind, der Einfachheit der Darstellung halber, Werkstück und Wälzschälwerkzeug auf die Situation am Wälzkreis (bzw. am Werkstück auf den Wälzzylinder) reduziert. Die dargestellten Verhältnisse gelten aber auch für die ganze Verzahnung mit einer Zahnhöhe.

FIG. 1    zeigt eine schematische Darstellung eines Stossrads mit zylindrischer Außenkontur im Eingriff mit einem außenverzahnten Werkstück beim Wälzstossen;

FIG. 2A    zeigt eine schematische Darstellung eines geradverzahnten Schälrads mit zylindrischer Außenkontur im Eingriff mit einem außenverzahnten Werkstück beim Wälzschälen;

FIG. 2B    zeigt eine schematische Darstellung eines schrägverzahnten Schälrads mit konischer Außenkontur im Eingriff mit einem außenverzahnten Werkstück beim Wälzschälen;

Fig. 3    zeigt eine schematische Abbildung einer auslaufenden Zahnnut gemäss der internationalen Patentanmeldung WO 2010/060733;

FIG. 4A    zeigt eine schematische Achskreuzprojektion (Berührebenenprojektion) eines konischen Wälzschälwerkzeugs beim Wälzschälen eines außenverzahnten Werkstücks, wobei ein Achskreuzwinkel vorgegeben ist;

FIG. 4B    zeigt eine schematische Achskreuzseitenprojektion (Berührebenenseitenprojektion) des konischen Wälzschälwerkzeugs und Werkstücks nach Fig. 4A;

FIG. 5    zeigt eine schematische Ansicht eines weiteren konischen Wälzschälwerkzeugs beim Wälzschälen eines außenverzahnten Werkstücks, wobei das Wälzschälwerkzeug gegenüber dem Werkstück ungeneigt ist;

FIG. 6A    zeigt eine schematische Achskreuzprojektion eines zylindrischen Wälzschälwerkzeugs beim Wälzschälen eines außenverzahnten Werkstücks, wobei das Wälzschälwerkzeug mit einem kleinen Winkel vom Werkstück weggeneigt ist und sich ein Spanflächenversatz ergibt;

FIG. 6B    zeigt eine schematische Berührebenenseitenprojektion des zylindrischen Wälzschälwerkzeugs und Werkstücks nach Fig. 6A

FIG. 7A    zeigt eine schematische Achskreuzseitenprojektion eines weiteren zylindrischen Wälzschälwerkzeugs beim Wälzschälen eines außenverzahnten Werkstücks, wobei das Wälzschälwerkzeug mit einem kleinen Winkel vom Werkstück weggeneigt ist;

FIG. 7B    zeigt eine schematische Berührebenenseitenprojektion des zylindrischen Wälzschälwerkzeugs und Werkstücks nach Fig. 7A;

FIG. 8A    zeigt das Ergebnis einer Simulation der Relativbewegung eines Schneidzahns eines Wälzschälwerkzeugs im Material eines Werkstücks in einer ersten Momentaufnahme;

FIG. 8B    zeigt eine zweite Momentaufnahme der Simulation, wobei sich der Schneidzahn des Wälzschälwerkzeugs im Material des Werkstücks gegenüber der Situation in Fig. 8A ein Stück weiter in Schnittrichtung nach links bewegt hat;

FIG. 8C    zeigt eine dritte Momentaufnahme der Simulation, wobei sich der Schneidzahn des Wälzschälwerkzeugs im Material des Werkstücks gegenüber der Situation in Fig. 8B ein Stück weiter in Schnittrichtung nach links bewegt hat;

FIG. 9    zeigt einen Abschnitt eines Werkstücks mit mehreren Zähnen und Zahnlücken, wobei eine Wanne gemäss der Figuren 8A bis 8C durch die Zahnlücke wandert;

**FIG. 10**   zeigt einen Abschnitt eines Werkstücks in einer seitlichen Ansicht, wobei die Position der Wanne im Moment des axialen Einstechens in stark schematisierter Form gezeigt ist;

**FIG. 11A**   zeigt einen Abschnitt eines Werkstücks in einer seitlichen Ansicht, wobei die Position der Wanne im Moment des erfindungsgemässen radialen Einstechens in stark schematisierter Form gezeigt ist;

**FIG. 11B**   zeigt einen Abschnitt des Werkstücks nach Fig. 11A in einer Draufsicht, wobei die Position der Wanne im Moment des erfindungsgemässen radialen Einstechens in stark schematisierter Form gezeigt ist;

**FIG. 12A**   zeigt einen Abschnitt eines Werkstücks in einer seitlichen Ansicht, wobei das Zustellen und Eintauchen in stark schematisierter Form gezeigt ist;

**FIG. 12B**   zeigt einen Abschnitt eines Werkstücks in einer seitlichen Ansicht, wobei das Zustellen und Eintauchen in stark schematisierter Form gezeigt ist;

**FIG. 13A**   zeigt eine stark schematisierte Ansicht einer Wanne samt einer Schneide eines Messerstabs, wobei der Spanwinkel im gezeigten Moment ca. Null Grad beträgt;

**FIG. 13B**   zeigt eine weitere stark schematisierte Ansicht einer Wanne samt einer Schneide eines Messerstabs, wobei der Spanwinkel im gezeigten Moment deutlich negativ ist;

**FIG. 14**   zeigt einen Abschnitt eines Werkstücks in einer Draufsicht, wobei die Position der Wanne beim Durchlaufen einer Zahnlücke in stark schematisierter Form gezeigt ist;

**FIG. 15**   zeigt einen Abschnitt eines Werkstücks beim Wälzschälen, wobei zu erkennen ist, wie ein Messerstab mit Schneidzahn eines nicht gezeigten Wälzschälwerkzeugs durch eine Zahnlücke geführt wird;

**FIG. 16**   zeigt eine perspektivische Ansicht eines innenverzahnten Zylinderwerkstücks beim Wälzschälen mit einem Stabmesser-Schälrad;

**FIG. 17**   zeigt eine perspektivische Ansicht eines innenverzahnten Zylinderwerkstücks beim Wälzschälen mit einem Vollwerkzeug als Schälrad;

**FIG. 18**   zeigt eine stark perspektivische Ansicht einer erfindungsgemässen Maschine mit einem Wälzschälwerkzeug beim Verzahnen eines innenverzahnten Werkstücks.

DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Die Erfindung lässt sich ohne weiteres auf andere Begriffssysteme und/oder Fachgebiete übertragen. In anderen Fachgebieten sind die Begriffe sinngemäß anzuwenden.

Rotationssymmetrische periodische Strukturen sind zum Beispiel Zahnräder mit Innen- und/oder Außenverzahnung. Es kann sich aber zum Beispiel auch um Bremsscheiben, Kupplungs- oder Getriebeelemente und dergleichen handeln. Insbesondere eignen sich die Wälzschälwerkzeuge zur Herstellung von Ritzelwellen, Schnecken, Hohlrädern, Zahnradpumpen, Ringgelenknaben (Ringgelenke finden zum Beispiel im Kraftfahrzeugsektor Verwendung, um die Kraft von einem Differential auf ein Fahrzeugrad zu übertragen), Keilwellenverbindungen, Schiebemuffen, Riemenscheiben und dergleichen. Die periodischen Strukturen werden hier auch als periodisch wiederkehrende Strukturen bezeichnet.

Im Folgenden ist primär von Zahnrädern, Zähnen und Zahnlücken die Rede. Die Erfindung lässt sich aber auch auf andere Bauteile mit anderen periodischen Strukturen übertragen, wie oben erwähnt. Bei diesen anderen Bauteilen geht es in diesem Fall dann nicht um Zahnlücken sondern zum Beispiel um Nuten oder Rillen.

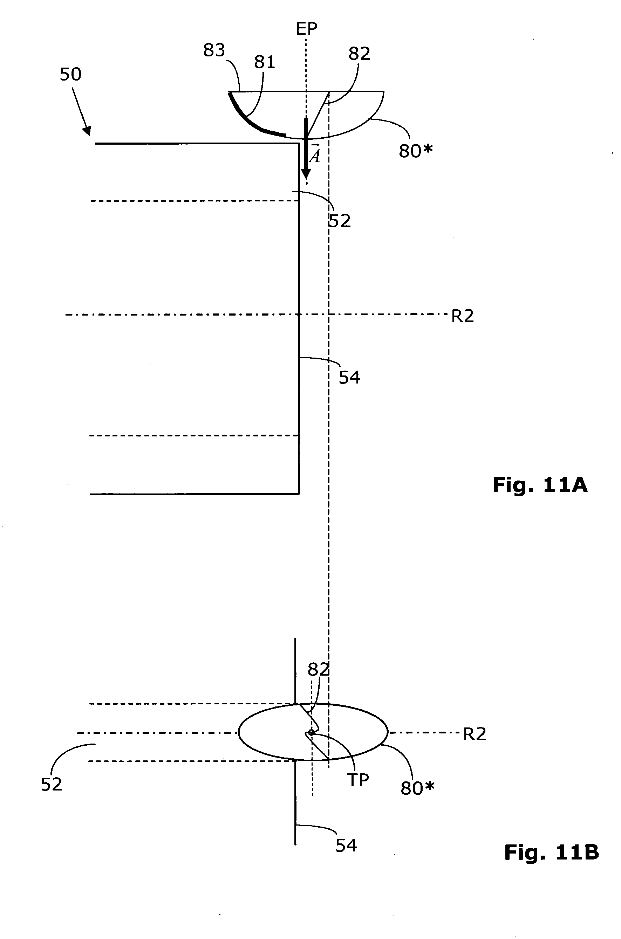

Die Erfindung nutzt die Ergebnisse von Untersuchungen und Simulationen, wie eingangs erwähnt. Gemäss Erfindung erfolgt das Einstechen mit einer deutlichen radialen Bewegungskomponente, wie in Fig. 11A gezeigt. Durch das radial gerichtete Einstechen werden die ungünstigen Bedingungen bei der ersten Berührung des Wälzschälwerkzeugs 100 mit dem Werkstück 50 vermieden, die bisher beim axialen Einstechen aufgetreten sind.

Das radiale Einstechen ist in Fig. 11A mit einem Pfeil und dem Bezugszeichen A gekennzeichnet.

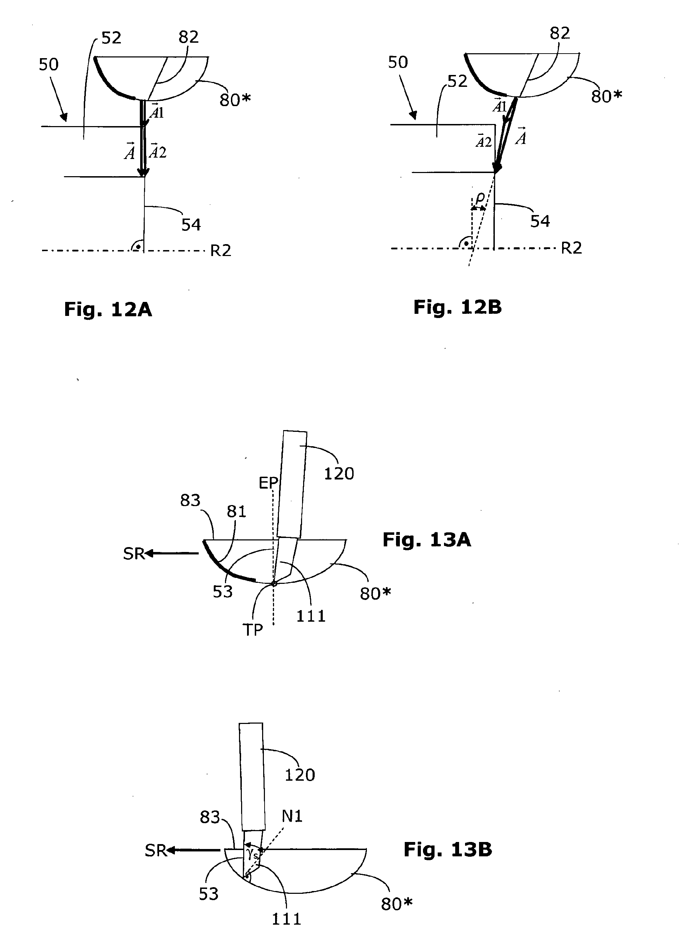

Gemäss Erfindung geht es um ein sogenanntes modifiziertes Einstechverfahren, bei dem Wälzschälwerkzeug 100 und Werkstück 50 eine Relativbewegung ausführen, die so verläuft, dass beim ersten Berühren des Wälzschälwerkzeugs 100 mit dem Werkstück 50 ein effektiver Spanwinkel von ca. Null Grad an den Schneiden des Wälzschälwerkzeugs 100 auftritt. Um dies zu erreichen, ist mindestens die letzte Bewegungsphase beim Zustellen durch eine im Wesentlichen radiale Zustellbewegung $\vec{A}1$ gekennzeichnet, wie in Fig. 12A gezeigt. Auf diese radiale Zustellbewegung $\vec{A}1$ folgt gemäss Erfindung die radiale Eintauch- oder Einstechbewegung $\vec{A}2$. Bei dieser radialen Eintauch- oder Einstechbewegung $\vec{A}2$ tauchen die Schneiden des Wälzschälwerkzeugs in das Material des Werkstücks 50.

In Fig. 12A ist schematisch gezeigt, dass sich das radiale Einstechen A aus zwei Teilbewegungen $\vec{A}1$ und $\vec{A}2$ zusammensetzt, wobei im gezeigten Fall beide Teilbewegungen $\vec{A}1$ und $\vec{A}2$ rein radial gerichtet sind. Die Vektoraddition der beiden Teilbewegungen $\vec{A}1$ und $\vec{A}2$ ergibt den Vektor $\vec{A}$. Die rein radialen Bewegungen stehen senkrecht zur Rotationsachse R2 des Werkstücks 50, bzw. diese Bewegung verlaufen parallel zur Stirnfläche 54 des Werkstücks 50.

In Fig. 12B ist schematisch gezeigt, dass sich das radiale Einstechen A aus zwei Teilbewegungen $\vec{A}1$ und $\vec{A}2$ zusammensetzt, wobei im gezeigten Fall beide Teilbewegungen $\vec{A}1$ und $\vec{A}2$ eine deutliche radiale Komponente und eine kleine axiale Komponente haben. Der resultierende Vektor $\vec{A}$ ergibt sich erneut aus der Vektoraddition der beiden Teilbewegungen $\vec{A}1$ und $\vec{A}2$.

Die beiden Teilbewegungen $\vec{A}1$ und $\vec{A}2$ können in die selbe Richtung weisen (siehe z.B. Fig. 12A), oder sie können leicht unterschiedliche Richtungen haben (siehe z.B. Fig. 12B).

Fig. 13A zeigt eine stark schematisierte Ansicht einer Wanne 80* samt einer Schneide 111 eines Messerstabs 120, wobei der effektive Spanwinkel $\gamma_s$ an der Kopfschneide im gezeigten Moment ca. Null Grad beträgt. Der effektive Spanwinkel $\gamma_s$ ist in der gewählten projizierten Darstellung in etwa der Winkel zwischen der Spanfläche 53 der Schneide 111 und der Normalen N1 im Berührpunkt zwischen Spanfläche 53 und dem Boden der Wanne 80*. In Fig. 13A liegt diese Normale N1 ungefähr in der Ebene der Spanfläche 53. Fig. 13A zeigt den Moment der erste Berührung des Wälzschälwerkzeugs 100, respektive der Schneide 111 des Wälzschälwerkzeugs 100 mit dem Material des Werkstücks 50, 70. Der Punkt der ersten Berührung fällt in etwa mit dem tiefsten Punkt TP der Wanne 80* zusammen. Die Erzeugendenlinie 82 geht übrigens immer durch den tiefsten Punkt TP der Wanne 80*.

Es ist hier anzumerken, dass die Wannen 80* in den Figuren 11A, 11B und folgende bewusst spiegelsymmetrisch dargestellt sind. In der Praxis können die Wannen 80* jedoch auch eine asymmetrische Form aufweisen, wenn z.B. der Neigungswinkel $\delta$ ungleich Null ist.

Fig. 13B zeigt eine weitere stark schematisierte Ansicht einer Wanne 80* samt einer Schneide 111 eines Messerstabs 120, wobei der effektive Spanwinkel $\gamma_s$ an der Kopfschneide im gezeigten Moment deutlich negativ ist. In Fig. 13B ist die Normale N1 sichtbar, da sie nicht in der Ebene der Spanfläche 53 liegt. Anhand der beispielhaften und stark schematisierten Figuren 13A und 13B wird ersichtlich, dass der effektive Spanwinkel $\gamma_s$ mit fortschreitender Bewegung der Schneide 111 in Schnittrichtung SR immer negativer wird.

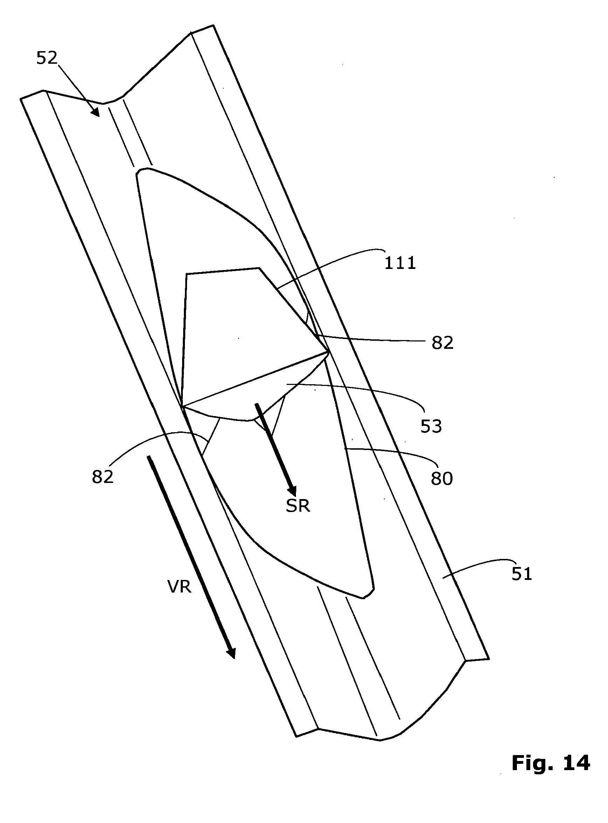

Wichtig ist, dass die beiden Teilbewegungen $\vec{A}1$ und $\vec{A}2$ so in Bezug zum Werkstück 50 ausgeführt werden, dass die Erzeugendenlinie 82 außerhalb des Materials des Werkstücks 50 zu liegen kommt, bevor die axiale Vorschubbewegung parallel zur Rotationsachse R2 (d.h. in Vorschubrichtung VR, wie in Fig. 14 gezeigt) des Werkstücks 50 ausgeführt wird. Ausserdem sollte beachtet werden, dass die erste Teilbewegung $\vec{A}1$ so verläuft, dass die erste Berührung zwischen Wälzschälwerkzeug und Werkstück 50 mit einem Spanwinkel von ca. Null Grad erfolgt. Wenn die axiale Bewegungskomponente im Zeitpunkt des ersten Berührens zu groß ist, kann diese Bedingung unter Umständen nicht erfüllt sein und es kann zu einer plötzlichen starken Schlagbelastung der entsprechenden Schneide(n) kommen.

Der effektive Winkel $\rho$ zwischen dem resultierenden Vektor $\vec{A}$ und einer Normalen auf der Rotationsachse R2, ist gemäss Erfindung stets ein spitzer Winkel.

Vorzugsweise liegt der Betrag des effektiven Winkels $\rho$ bei allen Ausführungsformen zwischen 0 und 30 Grad.

Vorzugsweise liegt der Betrag des effektiven Spanwinkels bei allen Ausführungsformen im Moment der ersten Berührung zwischen 0 und 5 Grad.

Wie eingangs erwähnt, ergibt die Überlagerung der gekoppelten Drehbewegungen des Wälzschälwerkzeugs 100 um die erste Rotationsachse R1 und des Werkstücks 50, 70 um die zweite Rotationsachse R2, und der linearen Axialbewegungen des Wälzschälwerkzeugs 100 relativ zum Werkstück 50, 70, bei einer Aufzeichnung der Gesamtheit der Bahnpunkte einer Schneide 111 eine Art Wannen- oder Trogform, wie in den Figuren 11A, 11B, 12A und 12B gezeigt. Die entsprechende Wanne ist in diesen Figuren mit dem Bezugszeichen 80 gekennzeichnet.

Diese Wanne 80 ergibt sich aus der Gesamtheit der in der Lücke 52 des Werkstücks 50 (oder 70) liegenden Bahnpunkte der Schneide des Schneidzahns 111 für einen Eingriff des Schneidzahns 111 in diese Lücke 52. Der darauffolgende Eingriff eines weiteren Schneidzahns 111 (dies kann derselbe oder ein anderer Schneidzahn 111 des Wälzschälwerkzeugs 100 sein) erzeugt ebenso eine Wanne 80, welche auf Grund des Axialvorschubs und des daran gekoppelten Differentialvorschubs in axialer Richtung in der Lücke 52 versetzt ist. Die Wanne 80 bewegt sich also während des Wälzschälens schrittweise (zumindest virtuell) durch das Material des Werkstücks 50. Die Linie 82 grenzt die Überlagerung von zwei Wannen voneinander ab, welche sich in ihrer Position um den Vorschub zwischen zwei unmittelbar aufeinanderfolgenden Schneidzahneingriffen unterscheiden. D.h. die Linie 82 kennzeichnet die Schnittkurve der beiden Wannen. Für unendlich kleinen Axialvorschub entspricht diese Schnittkurve der sogenannten Erzeugendenlinie. Die gesamte Zahnlücke 52 kann man sich als Menge solcher Erzeugendenlinien denken, die in Schnittrichtung durch das Material des Werkstücks 50 wandern.

Die Form und Größe der Wanne 80 ändert sich beim radialen Einstechen gemäss Erfindung, da sich die Relativbahn der Schneidzähne 111 und somit auch der Schneiden mit dem Achsabstand ändert. Dieser Aspekt wird in den Figuren 11A, 11B, 12A, 12B, 13A und 13B vernachlässigt. Zur besseren Unterscheidung wird die Wanne beim erfindungsgemässen Einstechverfahren mit dem Bezugszeichen 80* bezeichnet. Beim konventionellen axialen Einstechen, wie in Fig. 10 gezeigt, sind die Wannen 11 tatsächlich immer gleich.

Beim radialen Einstechen wird die Wanne 80* mit dem Wannenboden voran, vorzugsweise mit dem tiefsten Punkt TP der Wanne 80*, mit einer hauptsächlich radial gerichteten Bewegung an das Werkstück 50 heran geführt. Durch diese neue Form des Zustellens (erste Teilbewegung $\vec{A}1$) und durch das anschließende Eintauchen (zweite Teilbewegung $\vec{A}2$) wird vermieden, dass die Schneiden des Wälzschälwerkzeugs 100 mit einem deutlich negativen Spanwinkel im Bereich von -15 Grad bis -30 Grad oder sogar einem stark negativen Spanwinkel im Bereich von mehr als -30 Grad in das Material des Werkstücks 50 eintauchen. Der entsprechende Bereich der Wanne 80*, der gemäss Erfindung vermieden wird, ist in Fig. 11A, 12A, 12B und 13A vereinfacht und zusammenfassend durch eine dicke Kurvenlinie 81 gekennzeichnet. In der Praxis rutscht die Wanne 80* beim erfindungsgemässen Einstechen immer mehr in das Material des Werkstücks 50, 70 hinein, so dass der relevante Bereich der Kurvenlinie 81 bis zur vollen Eintauchtiefe immer mehr zunimmt. Beim bisherigen axialen Einstechen wächst der relevante Bereich der Kurvenlinie 81 ausgehend vom Wannenrand 83, beim radialen Einstechen gemäss Erfindung wächst die Kurvenlinie 81 ausgehend vom Wannenboden (am Tiefpunkt der Wanne 80*) in Richtung Wannenrand 83.

Gemäss Erfindung reicht es aus, um die Zahnlücke 52 vollständig zu generieren, an einer bestimmbaren Einstechposition EP entlang der Zahnbreite der Verzahnung radial statt axial zum Werkstück 50 einzustechen, wie in Fig. 11A gezeigt. Die Einstichposition EP bestimmt sich vorzugsweise aus der Lage der Erzeugendenlinie 82, die in den Figuren 11A, 11B, 12A, 12B und 14 durch eine Linie dargestellt ist. In Fig. 11B ist schematisch dargestellt, dass der tiefste Punkt TP der Wanne 80* im Moment der ersten Berührung knapp außerhalb des Material des Werkstücks 50 oder 70 liegt. In diesem Moment liegt der tiefste Punkt TP der Wanne 80* unmittelbar vor der Stirnfläche 54 des Werkstücks 50 oder 70.

Gemäss Erfindung erfolgt somit die erste Spanabnahme bei deutlich günstigeren Spanungsbedingungen als bei bisherigen Wälzschälverfahren.

Das Wälzschälen ist ein komplizierter Prozess, bei dem sich die Schnittbedingungen an den Schneiden des Wälzschälwerkzeugs 100 permanent ändern, wie anhand der Wanne 80 dargestellt wurde. Gemäss Erfindung werden die relativen Bewegungsabläufe so optimiert, dass der Bereich 81 der Wanne 80 beim ersten Berühren und in der Anfangsphase des Einstechens (Eintauchen genannt) möglichst vermieden wird.

Einerseits kommt somit das Vermeiden des Bereichs 81 beim ersten Inkontaktbringen des Wälzschälwerkzeugs 100 mit dem Werkstück 50 zur Anwendung, indem durch eine geeignete erste Teilbewegung $\vec{A}1$ deutlich radial zugestellt wird, wie beschrieben.

Andererseits wird auch während des Einstechens bzw. Eintauchens auf die volle Tiefe der Zahnlücken 52 darauf geachtet, dass die Schneiden des Wälzschälwerkzeugs 100 nicht mit deutlich oder gar stark negativen Spanwinkeln ins Material des Werkstücks 50 fahren. Aus diesem Grund wird auch die zweite Teilbewegung $\vec{A}2$ entsprechend gewählt, wobei die zweite Teilbewegung $\vec{A}2$ so ausgeführt wird, dass am Ende des Eintauchens eine Zwischenposition erzielt wird, bei der die Erzeugendenlinie 82 gerade noch außerhalb der zu erzeugenden Lücke 52 liegt (analog zu Fig. 11B).

Es werden zu diesem Zweck vorzugsweise zur Festlegung der CNCgesteuerten Maschinenbewegung punktgenaue Berechnungen durchgeführt, um beim Ausführen der beiden Teilbewegungen $\vec{A}1$ und $\vec{A}2$ ungünstige Spanungsbedingungen zu vermeiden und die richtige Zwischenposition anzufahren, bevor das eigentliche Wälzschälen der Lücken 52 beginnt.

Fig. 14 zeigt einen Abschnitt eines Werkstücks 50 in einer Draufsicht, wobei die Position der Wanne 80 beim Durchlaufen einer Zahnlücke 52 in stark schematisierter Form gezeigt ist. Fig. 14 zeigt also das eigentliche Wälzschälen, das nach dem modifizierten Einstechverfahren folgt. Anhand von Fig. 14 kann man die Vorschubrichtung VR, die Schnittrichtung SR, die Lage eines Schneidzahns 111 und die schematische Form einer Spanfläche 53 erkennen. Die Vorschubrichtung VR verläuft in Lückenrichtung und setzt sich zusammen aus dem Axialvorschub und dem an diesen gekoppelten Differentialvorschub des Werkstücks 50. Die Schnittrichtung SR bildet mit der Vorschubrichtung VR einen spitzen Winkel. Eine Linie 82 an der Wanne 80 trennt den Bereich einer ersten Schnittbahn von dem Bereich einer zweiten Schnittbahn, wie bereits beschrieben. D.h. diese Linie 82 entspricht der bereits erwähnten Erzeugendenlinie. Anhand von Fig. 14 ist zu erkennen, dass die Werkzeugschneide des Schneidzahns 111 bei der Bewegung durch die zu generierende Lücke 52 die bereits beschriebene wannenförmige Fläche 80 beschreibt, wobei die Spanbildung des Spans gemäss Erfindung beim Zustellen und Eintauchen so einsetzt und bis zu einem Wannenpunkt erfolgt, dass anfangs keine negativen oder nur gering negative Spanwinkel, und während des fortschreitenden Eintauchens keine deutlich oder stark negativen Spanwinkel am Schneidzahn 111 auftreten.

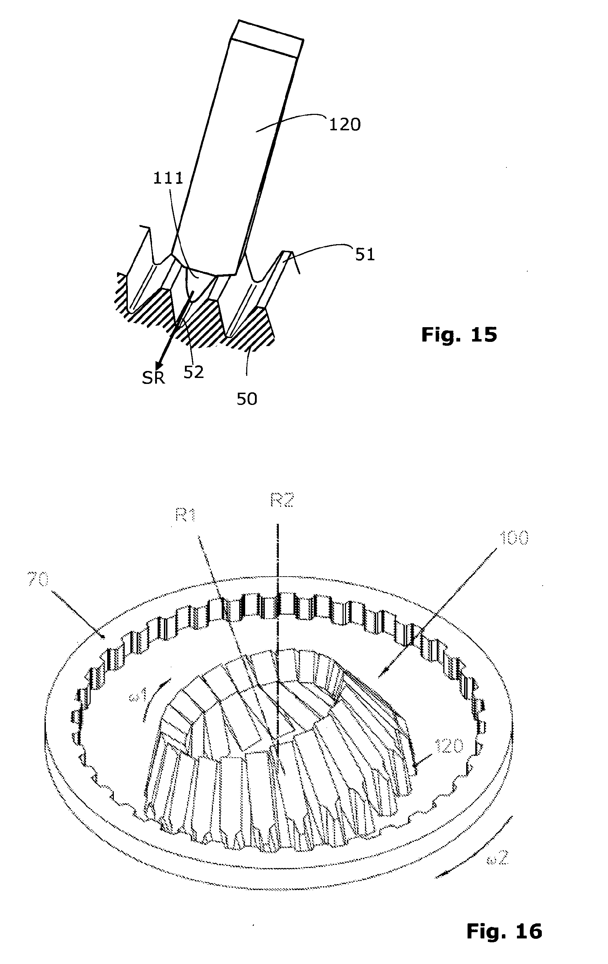

Fig. 15 zeigt einen Abschnitt eines Werkstücks 50 beim Wälzschälen, wobei zu erkennen ist, wie ein Messerstab 120 mit Schneidzahn 111 durch eine Zahnlücke 52 geführt wird. Das Wälzschälwerkzeug 100 (Stabmesser-Schälrad 100 genannt), das in Fig. 15 nicht gezeigt ist, umfasst einen Grundkörper zur Aufnahme mehrerer Messerstäbe 120. Hier ist jedoch nur ein Messerstab 120 gezeigt.

Fig. 16 zeigt eine perspektivische Ansicht eines innenverzahnten Zylinderwerkstücks 70 beim Wälzschälen mit einem Stabmesser-Schälrad 100. In Fig. 16 sind nur die Messerstäbe 120 gezeigt. Der Grundkörper, in dem die Messerstäbe 120 gelagert sind, ist ausgeblendet. Die Messerstäbe 120 sind hier in dem nicht gezeigten Grundkörper in einer konischen Konstellation angeordnet.

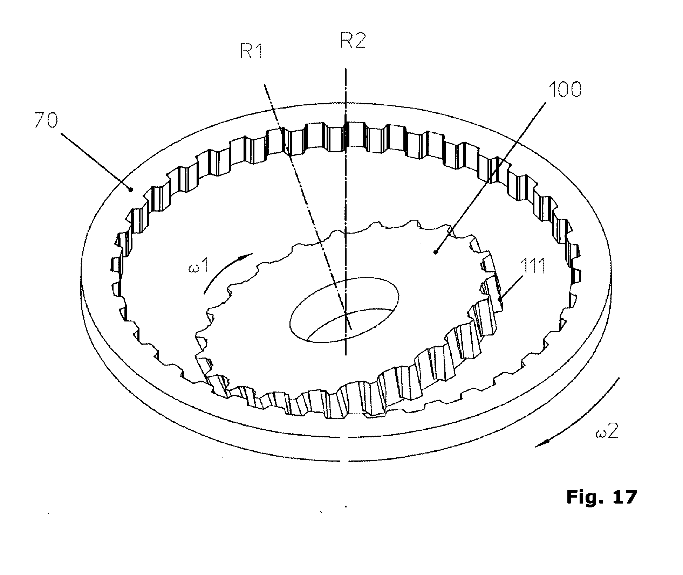

Fig. 17 zeigt eine perspektivische Ansicht eines weiteren innenverzahnten Zylinderwerkstücks 70 beim Wälzschälen mit einem Vollwerkzeug 100 als Schälrad. Das Schälrad 100 weist mehrere Schneidzähne 111 auf, wie gezeigt. Das Schälrad 100 ist vorzugsweise einstückig ausgeführt, d.h. die Schneidzähne 111 sind ein fester Bestandteil des scheibenförmigen Grundkörpers.

In den folgenden Absätzen werden weitere Erläuterungen zum erfindungsgemässen Wälzschälen gegeben.

Grundsätzlich entspricht die Relativbewegung zwischen dem Wälzschälwerkzeug 100 und dem Werkstück 50, 70 beim Wälzschälen einem Schraubradgetriebe, auch Wälzschraubgetriebe genannt. Es handelt sich bei dem Schraubradgetriebe um ein räumliches Getriebe.

Die Grundauslegung des Wälzschälprozesses erfolgt deshalb, wie bei der Auslegung von Getrieben, an einem sogenannten Auslegungspunkt AP (siehe z.B. Fig. 2B). Unter Grundauslegung wird hier die Festlegung der räumlichen Anordnung und Bewegung des Wälzschälwerkzeugs 100 bzgl. des Werkstücks 50, 70 (Kinematik) sowie die Festlegung der geometrischen Grundgrößen des Wälzschälwerkzeugs 100 wie etwa Durchmesser und Schrägungswinkel (Werkzeuggrundgeometrie) verstanden.

An dem Auslegungspunkt AP werden die geometrischen und kinematischen Eingriffsverhältnisse möglichst optimal gestaltet. Die Eingriffsverhältnisse ändern sich mit zunehmender Entfernung vom Auslegungspunkt AP. Das Wälzschälen stellt in diesem Zusammenhang ein sehr komplexes Verfahren dar, bei dem sich die Eingriffverhältnisse auch bei der Bewegung der Schneide kontinuierlich ändern. Jedoch lassen sich über die Eingriffsverhältnisse am Auslegungspunkt AP die sich ändernden Eingriffsverhältnisse gezielt beeinflussen.

Deshalb kommt der korrekten Auslegung der Eingriffsverhältnisse am Auslegungspunkt AP eine wesentliche Bedeutung bei der Auslegung von Wälzschälprozessen zu.

**Begriffe zur Achsanordnung:**

Es gibt mehrere Begriffe, die zur Festlegung der Achsanordnung erforderlich sind. Diese Begriffe werden in der folgenden Tabelle beschrieben.

| | |
|---|---|
| Gemeinlot | Wälzschälprozesse zeichnen sich durch sich im Raum kreuzende Rotationsachsen R2 und R1 von Werkstück 50, 70 und Wälzschälwerkzeug 100 aus. Zu den beiden sich kreuzenden Rotationsachsen R2 und R1 lässt sich eindeutig das Gemeinlot GL angeben (siehe z.B. Fig. 5). |
| Achskreuzprojektion, Achskreuzpunkt | Die Betrachtung von Werkstück 50, 70 und Wälzschälwerkzeug 100 entlang des Gemeinlots GL in Richtung des Gemeinlotvektors wird als Achskreuzprojektion (siehe z.B. Fig. 4A und Fig. 6A) bezeichnet.<br><br>In der Achskreuzprojektion schneiden sich die projizierten Rotationsachsen R1 und R2 im Achskreuzpunkt AK, welcher dem in der Projektion zum Punkt reduzierten Gemeinlot GL entspricht. |
| Achskreuzwinkel | Der Achskreuzwinkel $\Sigma$ ist der betragsmäßig kleinere Winkel, der von den beiden Rotationsachsen R1 und R2 eingeschlossen wird. Er wird in der Achskreuzprojektion sichtbar. Es gilt im Zusammenhang der vorliegenden Erfindung<br>$-90° < \Sigma < 90°$, $\Sigma \neq 0°$.<br>Der Achskreuzwinkel $\Sigma$ ist vorzeichenbehaftet. Das Vorzeichen ist in der Achskreuzprojektion wie folgt ohne Beschränkung der Allgemeinheit festgelegt: Für Außenverzahnungen ist der Achskreuzwinkel $\Sigma$ positiv, wenn die projizierte Rotationsachse R1 um den Achskreuzpunkt AK mathematisch positiv um $\|\Sigma\|$ bezüglich der projizierten Rotationsachse R2 verdreht ist. Für Innenverzahnungen ist er positiv, wenn die projizierte Rotationsachse R1 um den Achskreuzpunkt AK mathematisch negativ um $\|\Sigma\|$ bezüglich der projizierten Rotationsachse R2 verdreht ist. |

**Begriffe zum Kontakt zwischen Wälzschälwerkzeug und Werkstück:**

Es gibt mehrere Begriffe, die zur Beschreibung des Kontakts zwischen Wälzschälwerkzeug 100 und Werkstück 50, 70 erforderlich sind. Diese Begriffe werden in der folgenden Tabelle beschrieben.

| | |
|---|---|
| Wälzkreise | Die Wälzkreise von Werkstück 50, 70 und Wälzschälwerkzeug 100 berühren sich im Auslegungspunkt AP, der deshalb auch Berührpunkt BP genannt wird. Der Wälzkreis des Werkstücks 50, 70 (auch Werkstückwälzkreis genannt) liegt in einer Ebene, die senkrecht zur Rotationsachse R2 des Werkstücks 50, 70 liegt. Der Mittelpunkt des Wälzkreises liegt auf der Rotationsachse R2 des Werkstücks 50, 70. Der Durchmesser des Werkstückwälzkreises lautet $d_{w2}$. Der Wälzkreis des Wälzschälwerkzeugs 100 (auch Werkzeugwälzkreis genannt) liegt in einer Ebene, die senkrecht zur Rotationsachse R1 des Wälzschälwerkzeugs 100 liegt. Der Mittelpunkt des Wälzkreises W1 liegt auf der Rotationsachse R1 des Wälzschälwerkzeugs 100. Der Durchmesser des Werkzeugwälzkreises lautet $d_{w1}$. |
| Bezugsebenen | Die Werkzeugbezugsebene ist diejenige Ebene, in der der Werkzeugwälzkreis liegt. |
| Spanhalbraum, Schneidenhalbraum | Die Werkzeugbezugsebene teilt den 3-dimensionalen Raum in zwei Hälften. Der Spanhalbraum sei diejenige Hälfte, in die die aus dem Schneidenmaterial des Wälzschälwerkzeugs 100 herauszeigenden Spanflächennormalen hineinzeigen. Die andere Hälfte sei mit Schneidenhalbraum bezeichnet. Die Schneiden des Wälzschälwerkzeugs 100 erstrecken sich also im Wesentlichen im Schneidenhalbraum, können aber auch in den Spanhalbraum hineinreichen, wobei die Spanflächen dem Spanhalbraum zugewandt sind. |
| Geschwindigkeitsvektoren | Im Auslegungspunkt AP kann der aus der Werkstückdrehung um R2 resultierende Geschwindigkeitsvektor $\vec{v}_2$ des zugehörigen Werkstückpunktes angegeben werden. Er liegt in der Werkstückbezugsebene, tangential zum Werkstückwälzkreis. Der Betrag ist $\vec{v}_2 = |\pi \cdot d_{w2} \cdot n_2|$ mit der vorzeichenbehafteten Werkstückdrehzahl $n_2$. Im Auslegungspunkt AP kann ebenso der aus der Werkzeugdrehung um R1 resultierende Geschwindigkeitsvektor $\vec{v}_1$ des zugehörigen Werkzeugpunktes angegeben werden. Er liegt in der Werkzeugbezugsebene, tangential zum Werkzeugwälzkreis. Der Betrag ist $\vec{v}_1 = |\pi \cdot d_{w1} \cdot n_1|$ mit der vorzeichenbehafteten Werkzeugdrehzahl $n_1$. |
| Berührradiusvektoren | Vom Auslegungspunkt AP kann das Lot auf die Rotationsachse R2 des Werkstücks 50, 60, 70 gefällt werden. Der zugehörige Lotfußpunkt entspricht dem Schnittpunkt zwischen Werkstückbezugsebene und Werkstückrotationsachse R2 . Der Berührradiusvektor $\vec{r}_2$ des Werkstücks 50, 60, 70 ist bei Innenverzahnungen der Vektor vom Lotfußpunkt zum Auslegungspunkt AP, bei Außenverzahnungen der Vektor vom Auslegungspunkt AP zum Lotfußpunkt. Seine Länge ist $d_{w2}|/2$. Vom Auslegungspunkt AP kann das Lot auf die Rotationsachse R1 des Wälzschälwerkzeugs 100 gefällt werden. Der zugehörige Lotfußpunkt entspricht dem Schnittpunkt zwischen Werkzeugbezugsebene und Werkzeugrotationsachse R1. Der Vektor vom Lotfußpunkt zum Auslegungspunkt AP heißt Berührradiusvektor $\vec{r}_1$ des Werkzeugs 100. Seine Länge ist $d_{w1} / 2$. |
| Berührebene | Die beiden Geschwindigkeitsvektoren $\vec{v}_2$ und $\vec{v}_1$ spannen die sogenannte Berührebene auf. In dieser Berührebene berühren sich die Wälzkreise von Werkstück 50, 70 und Wälzschälwerkzeug 100, und zwar im Auslegungspunkt AP. Darüber hinaus berühren sich in dieser Berührebene auslegungsgemäß auch die theoretische Wälzfläche der Verzahnung von Werkstück 50, 70 und der Wälzkreis von Wälzschälwerkzeug 100. Genauer gesagt, ist die Berührebene tangential zur erwähnten Wälzfläche der Verzahnung von Werkstück 50, 70, und zwar im Auslegungspunkt AP. |

(fortgesetzt)

| | | |
|---|---|---|
| Wälzfläche, Bezugswälzfläche | | Die Wälzfläche einer Verzahnung wird auch Bezugswälzfläche genannt. Sie geht durch den Auslegungspunkt AP, ist rotationssymmetrisch bezüglich der Rotationsachse R2 des Werkstücks 50, 70 und spiegelt einen Teil der Grundgeometrie der Verzahnung wieder. Der Wälzkreis des Werkstücks ist Teil der Wälzfläche der Verzahnung von Werkstück 50, 70.<br><br>Für die hier detailliert beschriebenen und in den Figuren gezeigten zylindrischen Verzahnungen ist die Wälzfläche ein Zylinder, für kegelige Verzahnungen ein Kegel, für plane Verzahnungen eine Ebene und für allgemeine räumliche Verzahnungen wie z.B. bei Hypoidrädern ein Hyperboloid. Die Ausführungen, die im Folgenden im Zusammenhang mit zylindrischen Verzahnungen gemacht werden, lassen sich entsprechend auf andere Verzahnungen übertragen. |
| Berührebenennormale | | Die Berührebenennormale $\vec{n}$ sei derjenige im Auslegungspunkt AP verankerte Normalenvektor der Berührebene, der in die Verzahnung des Werkstücks 50, 70 hineinzeigt, d. h. vom Kopfbereich zum Fussbereich der Verzahnung zeigt. Bei Aussenverzahnungen am Werkstück 50, 70 zeigt die Berührebenennormale $\vec{n}$ somit zur Rotationsachse R2 des Werkstücks 50, 70, während sie bei Innenverzahnungen von ihr wegzeigt.<br><br>Für zylindrische Verzahnungen zeigt die Berührebenennormale in dieselbe Richtung wie der Berührradiusvektor $\vec{r}_2$ des Werkstücks 50, 70, d.h. $\vec{n}$ und $\vec{r}_2$ unterscheiden sich nur durch ihre Länge. |
| Berührebenenprojektion | | Die Betrachtung von Werkstück 50, 70 und Wälzschälwerkzeug 100 in Richtung des Berührradiusvektors $\vec{r}_2$ des Werkstücks 50, 60, 70 wird als Berührebenenprojektion bezeichnet.<br><br>In der Berührebenenprojektion schneiden sich die projizierten Rotationsachsen R1 und R2 im Auslegungspunkt AP bzw. Berührpunkt BP. |
| Effektiver Achskreuzwinkel | | Der effektive Achskreuzwinkel $\Sigma_{\text{eff}}$ ist der von den beiden Geschwindigkeitsvektoren $\vec{v}_2$ und $\vec{v}_1$ eingeschlossene Winkel gemäß $\cos(\Sigma_{\text{eff}}) = \dfrac{\vec{v}_2 \cdot \vec{v}_1}{\lvert \vec{v}_2 \rvert \lvert \vec{v}_1 \rvert}$. Gemäss Erfindung gilt -<br>$90° < \Sigma_{\text{eff}} < 90°$, $\Sigma_{\text{eff}} \neq 0°$.<br><br>Der effektive Achskreuzwinkel $\Sigma_{\text{eff}}$ ist wie der Achskreuzwinkel $\Sigma$ vorzeichenbehaftet. Das Vorzeichen ist wie folgt ohne Beschränkung der Allgemeinheit festgelegt: Für Außenverzahnungen ist der effektive Achskreuzwinkel $\Sigma_{\text{eff}}$ positiv, wenn die Geschwindigkeitsvektoren $\vec{v}_1$ und $\vec{v}_2$ und die Berührebenennormale $\vec{n}$ in dieser Reihenfolge ein Rechtssystem bilden. Für Innenverzahnungen ist er positiv, wenn die Geschwindigkeitsvektoren $\vec{v}_1$ und $\vec{v}_2$ und die Berührebenennormale $\vec{n}$ in dieser Reihenfolge ein Linkssystem bilden.<br><br>Für nicht-plane Verzahnungen entspricht der effektive Achskreuzwinkel $\Sigma_{\text{eff}}$ der senkrechten Projektion des Achskreuzwinkels $\Sigma$ auf die Berührebene, also dem Achskreuzwinkel $\Sigma$ in der Berührebenenprojektion. |
| Neigungswinkel | | Der Neigungswinkel $\delta$ beschreibt die Neigung der Werkzeugbezugsebene und damit des Wälzschälwerkzeugs 100 bzgl. der Berührebene. Er ist der vom Berührradiusvektor $\vec{r}_1$ des Wälzschälwerkzeugs 100 und der Berührebenennormale $\vec{n}$ eingeschlossene Winkel gemäß $\cos(\delta) = \dfrac{\vec{n} \cdot \vec{r}_1}{\lvert \vec{n} \rvert \lvert \vec{r}_1 \rvert}$ mit $-90° \leq \delta \leq 90°$.<br><br>Der Neigungswinkel $\delta$ ist identisch zum (betragsmäßig kleineren) Schnittwinkel zwischen der Rotationsachse R1 des Wälzschälwerkzeugs 100 und der Berührebene. Der Neigungswinkel $\delta$ ist 0°, wenn die Werkzeugbezugsebene senkrecht zur Berührebene steht und die Werkzeugrotationsachse R1 somit parallel zur Berührebene verläuft. |

(fortgesetzt)

| | |
|---|---|
| | Der Neigungswinkel $\delta$ ist vorzeichenbehaftet. Der Neigungswinkel $\delta$ ist positiv wenn die Rotationsachse R1 des Wälzschälwerkzeugs 100 die Berührebene im Spanhalbraum schneidet. Der Neigungswinkel $\delta$ ist negativ wenn die Rotationsachse R1 des Wälzschälwerkzeugs 100 die Berührebene im Schneidenhalbraum schneidet. |

**Weitere Projektionen:**

Es gibt verschiedene weitere Projektionen, die zur Veranschaulichung der Erfindung eingesetzt werden. Die entsprechenden Projektionen sind in der folgenden Tabelle erläutert.

| | |
|---|---|
| Achskreuzseitenprojektion | Der Achskreuzseitenprojektionsvektor (siehe z.B. Fig. 4B und 7A) sei derjenige zum Gemeinlot GL und zur Rotationsachse R2 des Werkstücks 50, 70 senkrechte Vektor, der mit dem Geschwindigkeitsvektor $\vec{v}_2$ des berührenden Werkstückpunktes einen spitzen Winkel einschließt. Dann wird die Betrachtung von Werkstück 50, 70 und Wälzschälwerkzeug 100 in Richtung dieses Achskreuzseitenprojektionsvektors als Achskreuzseitenprojektion bezeichnet. In der Achskreuzseitenprojektion verlaufen die projizierten Rotationsachsen R1 und R2 parallel zueinander. |
| Berührebenenseitenprojektion | Die Betrachtung von Werkstück 50, 70 und Wälzschälwerkzeug 100 in Richtung des Geschwindigkeitsvektors $\vec{v}_2$ des berührenden Werkstückspunktes wird als Berührebenenseitenprojektion (siehe z.B. Fig. 4B, 6B und 7B) bezeichnet. |

Die folgende Gleichung [1] stellt für nicht-plane Verzahnungen den Zusammenhang zwischen den die räumliche Anordnung der Rotationsachsen R1 und R2 beschreibenden Winkeln her und ist damit für die Umrechnung der einzelnen Größen wichtig:

$$\cos(\Sigma) = \cos(\Sigma_{eff}) \cdot \cos(\delta) \qquad\qquad [1]$$

In dieser verallgemeinerten Konstellation wird der Achskreuzwinkel $\Sigma$ in den effektiven Achskreuzwinkel $\Sigma_{eff}$ und den Neigungswinkel $\delta$ zerlegt, wobei der effektive Achskreuzwinkel $\Sigma_{eff}$ die bestimmende Größe für die Erzeugung der relativen Schnittbewegung zwischen dem sich drehenden Wälzschälwerkzeug 100 und dem sich drehenden Werkstück 50, 70 ist. Für plane Verzahnungen sind der effektive Achskreuzwinkel $\Sigma_{eff}$ und der Neigungswinkel $\delta$ wohl definiert, jedoch gilt nicht der Zusammenhang [1].

Gemäss Erfindung kann ein Neigungswinkel $\delta$ vorgegeben werden, dessen Betrag ungleich Null Grad ist, d.h. die Neigung der Werkzeugbezugsebene und damit des Wälzschälwerkzeugs 100 bezüglich der Berührebene (die durch die beiden Geschwindigkeitsvektoren $\vec{v}_2$ und $\vec{v}_1$ aufgespannt wird) ist negativ oder positiv. Daher ist im Zusammenhang mit der vorliegenden Erfindung vom Hinneigen oder Wegneigen des Wälzschälwerkzeugs 100 zum Werkstück 50, 70 die Rede. Das Hinneigen oder Wegneigen ist jedoch optional.

Vorzugsweise liegt bei allen Ausführungsformen der effektive Achskreuzwinkel $\Sigma_{eff}$ in den folgenden Bereichen: $-60° \leq \Sigma_{eff} < 0$ und $0 < \Sigma_{eff} \leq 60°$.

Gemäss Erfindung geht es um ein sogenanntes modifiziertes Einstechverfahren, das im Zusammenhang mit dem Wälzschälen eines Werkstücks 50, 70 verwendet wird, wobei bei diesem Wälzschälen an dem Werkstück 50, 70 eine rotationssymmetrische, periodische Struktur, z.B. eine Aussen- oder Innenverzahnung, unter Einsatz eines Wälzschälwerkzeugs 100 hergestellt werden soll. Das modifizierte Einstechverfahren, wie in den Figuren 11, 12A und 12B gezeigt, zeichnet sich insbesondere dadurch aus, dass die folgenden Schritte zeitgleich und koordiniert ausgeführt werden:

- Drehen des Wälzschälwerkzeugs 100 um eine erste Rotationsachse R1 und gekoppeltes Drehen des Werkstücks 50, 70 um eine zweite Rotationsachse R2,
- Zustellen des Wälzschälwerkzeugs 100 mit einer radialen ersten Bewegungskomponente $\vec{A}1$ in Richtung Werkstück 50, 70 und
- Einstechen des Wälzschälwerkzeugs 100 mit einer radialen zweiten Bewegungskomponente $\vec{A}2$ in Richtung Werkstück 50, 70 vorzugsweise bis zur vollen Tiefe, wobei mindestens während des Einstechens die erste Rotationsachse R1 windschief zur zweiten Rotationsachse R2 verläuft, bzw. die beiden Rotationsachsen R1, R2 windschief relativ zueinander angestellt sind.

Anschliessend folgt das Ausführen einer relativen Vorschubbewegung des sich drehenden Wälzschälwerkzeugs 100 in Vorschubrichtung VR ab dem Erreichen der vollen Tiefe in Bezug auf das sich drehende Werkstück 50, 70, wobei auch während des Wälzschälens die erste Rotationsachse R1 windschief zur zweiten Rotationsachse R2 verläuft, bzw. die beiden Rotationsachsen R1, R2 windschief relativ zueinander angestellt sind.

Vorzugsweise wird mindestens während des Einstechens ein negativer oder positiver Neigungswinkel $\delta$ vorgegeben.

Das Wälzschälwerkzeug 100 weist bei allen Ausführungsformen Schneiden auf, die in Form von Schneidzähnen 111 ausgeprägt sind, die nach aussen ragen, wie z.B. in den Figuren 15, 16 und 17 zu erkennen. Die Spanflächen der Schneidzähne 111 sind im Wesentlichen bezüglich der Stirnfläche des sich verjüngenden Wälzschälwerkzeugs 100 ausgeprägt.

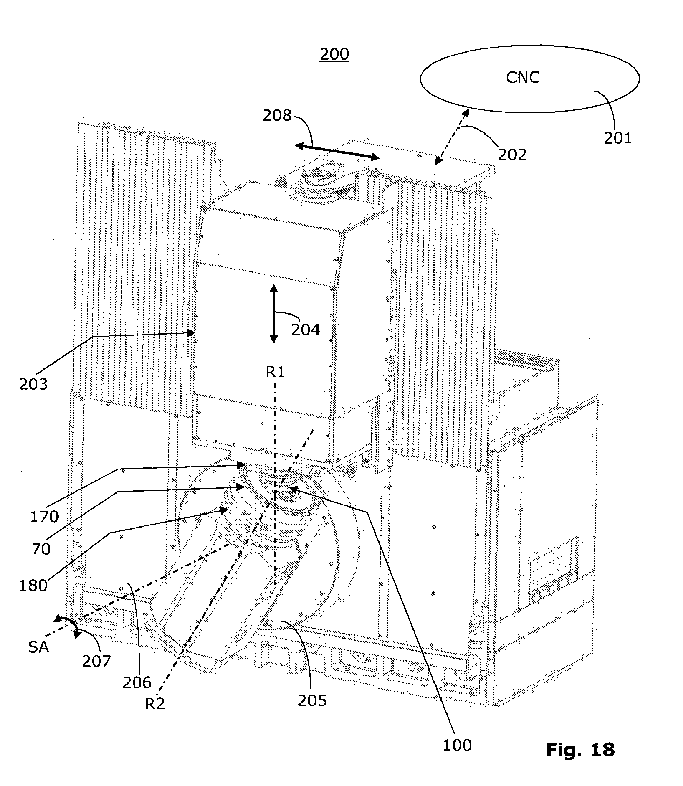

Das Wälzschälwerkzeug 100 weist bei allen Ausführungsformen die Form eines Schneidrads, vorzugsweise die Form eines Scheibenschneidrads, eines Schaftschneidrads oder Scheiben-Glockenschneidrads (z.B. gemäss DIN 3972 oder DIN 5480) auf. Bei allen Ausführungsformen kann zwischen dem Wälzschälwerkzeug 100 und der eigentlichen Werkzeugspindel 170, die in Fig. 18 zu erkennen ist, ein Adapterelement sitzen.

Vorzugsweise hat das Wälzschälwerkzeug 100 bei allen Ausführungsformen eine Mantelform oder Grundform mit einer Kollisionskontur, die dazu ausgelegt ist Kollisionen zwischen dem Wälzschälwerkzeug 100 und dem Werkstück 50, 70 zu vermeiden.

In Fig. 17 ist ein Wälzschälwerkzeug 100 gezeigt, das die Form eines Schneidrads hat. Es handelt sich hier um ein Vollwerkzeug, bei dem die Schneidzähne 111 Teil des Wälzschälwerkzeugs 100 sind. Das Wälzschälwerkzeug 100 weist hier 25 Schneidzähne 111 auf, von denen in Fig. 17 einer mit einem Bezugszeichen versehen ist. Der Grundkörper des Wälzschälwerkzeugs 100 hat die Form einer Kegelstumpfscheibe oder eines kegelstumpfförmigen Tellers.

Neben den kinematischen Aspekten und den Bedingungen, die sich aus der Vorgabe der gewünschten Freiwinkel ergeben, spielt auch die Beschaffenheit des Werkstücks 50, 70 eine nicht unbedeutende Rolle. Es gibt immer wieder Werkstücke 50, 70, bei denen sich an die Verzahnung oder periodische Struktur ein Bereich mit einem Durchmesser größer als der Fußkreisdurchmesser anschließt und die somit einen nur geringen Einlauf oder Überlauf bei der Fertigung einer Verzahnung oder einer anderen periodischen Struktur zulassen. Hier lässt sich das erfindungsgemässe Verfahren besonders vorteilhaft anwenden, da beim radialen Einstechen gemäss Fig. 11 weniger Platz im Einlaufbereich erforderlich ist als beim axialen Zustellen oder beim überlagerten Zustellen gemäss WO 2010/060733 A1. Analog kann man die Erfindung auf Werkstücke anwenden, die nur einen geringen Überlauf zulassen. In diesem Fall wird unmittelbar nach dem Erreichen der endgültigen Zahnlückenform das Wälzschälwerkzeug 100 radial zurück gezogen.

Eine Maschine 200, die zum erfindungsgemässen Zustellen, Eintauchen und zum anschließenden Wälzschälen ausgelegt ist, weist eine CNC-Steuerung 201 auf, die eine Koppelung der Achsen R1 und R2, respektive eine Koordination der Achsbewegungen ermöglicht. Die CNC-Steuerung 201 kann Teil der Maschine 200 sein, oder sie kann extern ausgeführt und zur kommunikationstechnischen Verbindung 202 mit der Maschine 200 ausgelegt sein. Die entsprechende Maschine 200 umfasst einen sogenannten "elektronischen Getriebezug", respektive eine "elektronische oder steuerungstechnische Achskopplung" um eine Relativbewegung des Wälzschälwerkzeugs 100 in Bezug zu dem innenverzahnten, wälzgeschälten Werkstück 70 auszuführen. Das gekoppelte Bewegen des Wälzschälwerkzeugs 100 und des Werkstücks 70 wird so ausgeführt, dass sich während der Bearbeitungsphase eine Relativbewegung zwischen dem Wälzschälwerkzeug 100 und dem Werkstück 70 ergibt, die der Relativbewegung eines Schraubradgetriebes entspricht. Der elektronische Getriebezug, respektive die elektronische oder steuerungstechnische Achskopplung sorgen für eine Drehzahlsynchronisierung von mindestens zwei Achsen der Maschine 200. Hierbei sind mindestens die Rotationsachse R1 der Werkzeugspindel 170 mit der Rotationsachse R2 der Werkstückspindel 180 gekoppelt. Ausserdem ist vorzugsweise bei allen Ausführungsformen die Rotationsachse R2 der Werkstückspindel 170 mit dem Axialvorschub in Richtung R2 gekoppelt. Die vertikale Linearbewegung eines Linearvorschubs 203 ist in Fig. 18 durch einen Doppelpfeil 204 dargestellt. Zusätzlich kann die Werkstückspindel 180 samt Teller 205 parallel zu einer Schwenkachse SA linear verschoben werden, wie durch einen Doppelpfeil 206 dargestellt. Der Axialvorschub erfolgt parallel zur Rotationsachse R2 und setzt sich zusammen aus einem vertikalen Bewegungsanteil 204, der durch den Linearvorschub 203 erzeugt wird, und einen horizontalen Bewegungsanteil, der durch eine lineare Bewegung 208 erzeugt wird. Ausserdem kann der Teller 205 samt Werkstückspindel 180 und Werkstück 170 um die Schwenkachse SA gedreht werden, wie durch einen Doppelpfeil 207 dargestellt.

Vorzugsweise kommt eine Maschine 200 zum Einsatz, die auf einer Vertikalanordnung basiert, wie in Fig. 18 gezeigt. Bei einer solchen Vertikalanordnung sitzt entweder das Wälzschälwerkzeug 100 samt Werkzeugspindel 170 oberhalb des Werkstücks 50, 70 samt Werkstückspindel 180, oder umgekehrt. Die Späne, die beim Einstechen und Wälzschälen entstehen, fallen aufgrund der Schwerkraftwirkung nach unten und können z.B. über ein Spanbett, das nicht gezeigt ist, entfernt werden.

Weiterhin sorgt eine Maschine 200, die zum erfindungsgemässen modifizierten Zustellen und Eintauchen ausgelegt ist, für die richtigen komplexen geometrischen und kinematischen Maschineneinstellungen und Achsbewegungen der genannten Achsen. Vorzugsweise hat die Maschine bei allen Ausführungsformen sechs Achsen. Fünf dieser Achsen wurden bereits beschrieben. Als sechste Achse kann eine Achse vorgesehen sein, die eine lineare Relativbewegung des Wälzschälwerkzeug 100 gegenüber dem Werkstücks 50, 70 ermöglicht. Diese lineare Relativbewegung ist in Fig. 18 durch den Doppelpfeil 208 angedeutet.

Das modifizierte Einstechverfahren kann bei allen Ausführungsformen trocken oder nass angewendet werden, wobei die Verwendung des modifizierten Einstechverfahrens im Zusammenhang mit dem Trocken-Wälzschälen bevorzugt ist.

Das Einsatzspektrum des modifizierten Einstechens ist groß und erstreckt sich auf die Anwendung bei der Herstellung verschiedenster rotationssymmetrischer periodischer Strukturen.

Bezugszeichenliste:

| | |
|---|---|
| Stossrad | 1 |
| Werkstück | 2 |
| Zahnkopf | 4 |
| Zahnbrust | 5 |
| Schneidzahn | 6 |
| Schneide | 6.1 |
| Zahnnut eines Werkstücks 8 | 7 |
| Werkstück | 8 |
| Bereich | 9 |
| Wälzschälwerkzeug | 10 |
| Wanne, Trog | 11 |
| Erzeugendenlinie | 12 |
| kritischer Bereich | 13 |

| | |
|---|---|
| (wälzgeschältes) Werkstück | 20 |
| Zahn | 21 |
| Zahnlücke | 22 |
| Stirnseite | 23 |

| | |
|---|---|
| (wälzgeschältes) Werkstück | 50 |
| Zahn | 51 |
| Zahnlücke | 52 |
| Span | 53 |
| Stirnseite | 54 |

| | |
|---|---|
| (innenverzahntes, wälzgeschältes) Werkstück | 70 |

| | |
|---|---|
| Wanne, Trog | 80* |
| kritischer Bereich | 81 |
| Erzeugendenlinie | 82 |
| Wannenrand | 83 |

| | |
|---|---|
| Wälzschälwerkzeug | 100 |
| Schneidzähne | 111 |

| | |
|---|---|
| Messerstäbe | 120 |

| | |
|---|---|
| Werkzeugspindel | 170 |

| | |
|---|---|
| Werkstückspindel | 180 |

| | |
|---|---|
| Maschine | 200 |
| CNC-Steuerung | 201 |
| kommunikationstechnische Verbindung | 202 |
| Linearvorschub | 203 |
| Vertikaler Bewegungsanteil | 204 |
| Teller | 205 |
| Linearverschiebung | 206 |
| Drehbewegung | 207 |
| lineare Relativbewegung | 208 |

| | |
|---|---|
| Freiwinkel der Kopfschneide | $\alpha_{Ki}$ |
| konstruktiver Freiwinkel | $\alpha_{Ko}$ |

| | |
|---|---|
| radiales Einstechen | A |
| radialer Einstechvektor | $\vec{A}$ |
| erste Teilbewegung (Zustellbewegung) | $\vec{A}1$ |
| zweite Teilbewegung (Eintauch- oder Einstechbewegung) | $\vec{A}_2$ |
| Achskreuzpunkt | AK |
| Auslegungspunkt | AP |
| Berührpunkt | BP |
| Schrägungswinkel des Werkzeugs | $\beta_1$ |
| Schrägungswinkel des Werkstücks | $\beta_2$ |
| Neigungswinkel | $\delta$ |
| Durchmesser des Werkstückwälzkreises | $d_{w2}$ |
| Einstichposition | EP |
| Berührebenennormale | $\vec{n}$ |
| Werkzeugdrehzahl | $n_1$ |
| Werkstückdrehzahl | $n_2$ |
| Normale | N1 |
| Rotationsachse des Werkzeugs (Werkzeugachse) | R1 |
| Berührradiusvektor des Werkzeugs 10 | $\vec{r}_1$ |
| Rotationsachse des Werkstücks (Werkstückachse) | R2 |
| Berührradiusvektor des Werkstücks 50, 70 | $\vec{r}_2$ |
| Spitzer Winkel | $\rho$ |
| Schwenkachse | SA |
| Hubbewegung | $s_{hx}$ |
| Axialvorschub | $s_{ax}$ |
| Differentialvorschub | $s_D$ |
| Radialvorschub | $s_{rad}$ |
| Schnittrichtung | SR |
| Effektiver Achskreuzwinkel | $\Sigma_{eff}$ |
| Achskreuzwinkel | $\Sigma$ |
| tiefster Punkt | TP |
| Betrag der Schnittgeschwindigkeit | $v_c$ |
| Schnittgeschwindigkeitsvektor | $\vec{v}_c$ |
| Betrag des Geschwindigkeitsvektors Wälzschälwerkzeug | $v_1$ |
| Geschwindigkeitsvektor Wälzschälwerkzeug | $\vec{v}_1$ |
| Betrag des Geschwindigkeitsvektors Werkstück | $v_2$ |
| Geschwindigkeitsvektor Werkstück | $\vec{v}_2$ |
| Vorschubrichtung | VR |
| Rotation um die Achse R1 | $\omega 1$ |
| Rotation um die Achse R2 | w2 |
| axiales Einstechen | ZB |

**Patentansprüche**

1. Verfahren zum Wälzschälen eines Werkstücks (50; 70) mit rotationssymmetrischer, periodischer Struktur unter Einsatz eines Wälzschälwerkzeugs (100), **gekennzeichnet durch** folgende Schritte, die vor dem eigentlichen Wälzschälen ausgeführt werden:

   - Drehen des Wälzschälwerkzeugs (100) um eine erste Rotationsachse (R1),
   - gekoppeltes Drehen des Werkstücks (50, 70) um eine zweite Rotationsachse (R2),
   - Ausführen einer radialen Zustellbewegung ($\vec{A}1$) in Richtung Werkstück (50, 70), um das Wälzschälwerkzeug (100) erstmals mit dem Werkstück (50; 70) in Berührung zu bringen,

   **gekennzeichnet durch**:

   - Einstechen des Wälzschälwerkzeugs (100) vom Moment der ersten Berührung bis zu einer vorgegebenen Tiefe mit einer radialen Eintauchbewegung ($\vec{A}2$) in Richtung Werkstück (50, 70), wobei mindestens während des Einstechens die beiden Rotationsachsen (R1, R2) windschief relativ zueinander angestellt sind.

2. Verfahren nach Anspruch 1, **dadurch gekennzeichnet, dass** beim Erreichen der vorgegebenen Tiefe eine Vorschubbewegung zusammengesetzt aus Axialvorschub in Richtung der zweiten Rotationsachse (R2) und Differentialvorschub des sich drehenden Wälzschälwerkzeugs (100) relativ zu dem sich drehenden Werkstück (50, 70) ausgeführt wird, wobei auch während dieser Vorschubbewegung die beiden Rotationsachsen (R1, R2) windschief relativ zueinander angestellt sind.

3. Verfahren nach Anspruch 1 oder 2, **dadurch gekennzeichnet, dass** das Wälzschälwerkzeug (100) mindestens während des Einstechens in Richtung auf das Werkstück (50; 70) hingeneigt oder vom Werkstück (50; 70) weggeneigt ist.

4. Verfahren nach Anspruch 1, 2 oder 3, **dadurch gekennzeichnet, dass** sich ein effektiver Achskreuzwinkel ($\Sigma_{eff}$) ergibt, der in einem der folgenden Bereiche liegt: $-60° \leq \Sigma_{eff} < 0$ und $0 < \Sigma_{eff} \leq 60°$.

5. Verfahren nach einem der vorhergehenden Ansprüche, **dadurch gekennzeichnet, dass** es sich bei der rotationssymmetrischen, periodischen Struktur um eine Innenverzahnung oder eine Aussenverzahnung des Werkstücks (50; 70) handelt.

6. Verfahren nach Anspruch 5, **dadurch gekennzeichnet, dass** es sich bei dem Werkstück (50; 70) um ein zylindrisches Werkstück handelt.

7. Verfahren nach einem der vorhergehenden Ansprüche, **dadurch gekennzeichnet, dass** ein Punkt der ersten Berührung des Wälzschälwerkzeugs (100) mit dem Werkstück (50; 70) im Übergangsbereich zwischen einer Stirnseite (54) und einer Mantelfläche des Werkstücks (50; 70) liegt.

8. Verfahren nach einem der vorhergehenden Ansprüche, **dadurch gekennzeichnet, dass** eine Einschnittstrategie beim Wälzschälen des Werkstücks (50; 70) zum Einsatz kommt.

**Claims**

1. A method for skiving a workpiece (50; 70) with rotationally-symmetrical, periodic structure by using a skiving tool (100), **characterized by** the following steps, which are executed before the actual skiving:

   - rotating the skiving tool (100) about a first axis of rotation (R1),
   - coupled rotation of the workpiece (50, 70) about a second axis of rotation (R2),
   - executing a radial infeed movement ($\vec{A}1$) in the direction of the workpiece (50, 70), to bring the skiving tool (100) into contact with the workpiece (50, 70) for the first time,

   **characterized by**

   - plunging the skiving tool (100) from the moment of the first contact up to a predefined depth with a radial

plunging movement ($\vec{A}2$) in the direction of the workpiece (50, 70), wherein at least during the plunging, the two axes of rotation (R1, R2) are aligned askew in relation to one another.

2. The method according to Claim 1, **characterized in that** upon reaching the predefined depth, an advance movement, composed of an axial advance in the direction of the second axis of rotation (R2) and a differential advance of the rotating skiving tool (100) in relation to the rotating workpiece (50, 70) is executed, wherein the two axes of rotation (R1, R2) are also aligned askew in relation to one another during this advance movement.

3. The method according to Claim 1 or 2, **characterized in that** the skiving tool (100) is inclined in the direction toward the workpiece (50; 70) or is inclined in the direction away from the workpiece (50; 70) at least during the plunging.

4. The method according to Claim 1, 2, or 3, **characterized in that** an effective axis intersection angle ($\Sigma_{eff}$) results, which is in one of the following ranges: $-60° \leq \Sigma_{eff} < 0$ and $0 < \Sigma_{eff} \leq 60°$.

5. The method according to one of the preceding claims, **characterized in that** the rotationally-symmetrical, periodic structure is internal gearing or external gearing of the workpiece (50; 70).

6. The method according to Claim 5, **characterized in that** the workpiece (50; 70) is a cylindrical workpiece.

7. The method according to one of the preceding claims, **characterized in that** a point of the first contact of the skiving tool (100) with the workpiece (50; 70) lies in the transition region between an end side (54) and a lateral surface of the workpiece (50; 70).

8. The method according to one of the preceding claims, **characterized in that** a single-cut strategy is used during the skiving of the workpiece (50; 70).

**Revendications**

1. Procédé de taillage par développante d'une pièce à usiner (50, 70) présentant une structure périodique à symétrie de rotation à l'aide d'un outil de taillage par développante (100), **caractérisé par** les étapes suivantes réalisées avant le taillage par développante proprement dit et lesquelles consistent à :

    - faire tourner l'outil de taillage par développante (100) autour d'un premier axe de rotation (R1),
    - faire tourner de manière accouplée la pièce à usiner (50, 70) autour d'un deuxième axe de rotation (R2),
    - exécuter un mouvement d'avance radial ($\vec{A}1$) en direction de la pièce à usiner (50, 70) de façon à amener l'outil de taillage par développante (100) pour la première fois en contact avec la pièce à usiner (50, 70),

    **caractérisé par** le fait de

    - plonger l'outil de taillage par développante (100) depuis le moment du premier contact jusqu'à une profondeur prédéterminée avec un mouvement de plongée radial ($\vec{A}2$) en direction de la pièce à usiner (50, 70), dans lequel au moins pendant la plongée les deux axes de rotation (R1, R2) sont disposés inclinés l'un par rapport à l'autre.

2. Procédé selon la revendication 1, **caractérisé en ce que**, lorsque l'on atteint la profondeur prédéterminée, il est réalisé un mouvement d'avance composé d'une avance axiale en direction du deuxième axe de rotation (R2) et d'une avance différentielle de l'outil de taillage par développante rotatif (100) par rapport à la pièce à usiner rotative (50, 70), dans lequel également pendant ce mouvement d'avance les deux axes de rotation (R1, R2) sont disposés inclinés l'un par rapport à l'autre.

3. Procédé selon la revendication 1 ou 2, **caractérisé en ce que** l'outil de taillage par développante (100), au moins pendant la plongée, est penché en direction de la pièce à usiner (50, 70) ou s'éloigne de la pièce à usiner (50, 70).

4. Procédé selon la revendication 1, 2 ou 3, **caractérisé en ce que** l'on obtient un angle d'intersection effectif ($\Sigma$eff) qui se situe dans l'une des plages suivantes : $-60° \leq \Sigma_{eff} < 0$ et $0 < \Sigma_{eff} \leq 60°$.

5. Procédé selon l'une des revendications précédentes, **caractérisé en ce que** la structure périodique à symétrie de rotation est une denture intérieure ou une denture extérieure de la pièce à usiner (50, 70).

**6.** Procédé selon la revendication 5, **caractérisé en ce que** la pièce à usiner (50, 70) est une pièce à usiner cylindrique.

**7.** Procédé selon l'une des revendications précédentes, **caractérisé en ce qu'**un point du premier contact de l'outil de taillage par développante (100) avec la pièce à usiner (50, 70) se situe dans la zone de transition entre une face frontale (54) et une surface d'enveloppe de la pièce à usiner (50, 70).

**8.** Procédé selon l'une des revendications précédentes, **caractérisé en ce qu'**on utilise une stratégie d'entaille pour le taillage par développante de la pièce à usiner (50, 70).

**Fig. 1**

**Fig. 2A**

**Fig. 2B**

**Fig. 3**

7

9

8

Σ

R1

20

10

AK=BP

R2

**Fig. 4A**

R1

$\alpha_{Ko}$

20

10

BP

**Fig. 4B**

**Fig. 5**

Σ

R1

10

20

e

AK

R2

**Fig. 6A**

$\alpha_{Ki}$

R1

20

10

BP

**Fig. 6B**

R2    R1

20    BP    10

GL    **Fig. 7A**

R2    R1

20    BP    10

GL    **Fig. 7B**

**Fig. 8A**

**Fig. 8B**

**Fig. 8C**

**Fig. 9**

**Fig. 10**

**Fig. 11A**

**Fig. 11B**

**Fig. 12A**

**Fig. 12B**

**Fig. 13A**

**Fig. 13B**

52

111

82

53

82

80

SR

VR

51

**Fig. 14**

**Fig. 15**

**Fig. 16**

Fig. 17

**Fig. 18**

**IN DER BESCHREIBUNG AUFGEFÜHRTE DOKUMENTE**

**In der Beschreibung aufgeführte Patentdokumente**

- DE 102007015357
- DE 243514
- DE 3915976 A1
- WO 2010060733 A1
- WO 2010060733 A